(19) Europäisches Patentamt
European Patent Office
Office européen des brevets

(11) EP 3 798 944 A1

# (12) EUROPEAN PATENT APPLICATION

(43) Date of publication:
**31.03.2021 Bulletin 2021/13**

(21) Application number: **20197359.1**

(22) Date of filing: **22.09.2020**

(51) Int Cl.:
***G06Q 10/04*** *(2012.01)* ***G06Q 50/22*** *(2018.01)*
***G02C 7/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 US 201962907882 P**
**26.12.2019 JP 2019237429**

(71) Applicant: **Hoya Lens Thailand Ltd.**
**Pathumthani 12130 (TH)**

(72) Inventor: **IIZUKA, Takashi**
**Tokyo, 1608347 (JP)**

(74) Representative: **Betten & Resch**
**Patent- und Rechtsanwälte PartGmbB**
**Maximiliansplatz 14**
**80333 München (DE)**

## (54) LEARNING MODEL GENERATION METHOD, COMPUTER PROGRAM, EYEGLASS LENS SELECTION SUPPORT METHOD, AND EYEGLASS LENS SELECTION SUPPORT SYSTEM

(57) A learning model generation method, a computer program, an eyeglass lens selection support method and an eyeglass lens selection support system that can be expected to support selection of an eyeglass lens by inferring specifications of an eyeglass lens suitable for a user. The eyeglass lens selection support system according to an embodiment includes a storage unit that stores a learning model that outputs specification information of an eyeglass lens if attribute information of a user, measurement information related to eyes of the user and use application information of eyeglasses by the user are input, a user information acquisition unit that acquires the attribute information, measurement information and use application information, and a specification information acquisition unit that inputs the attribute information, measurement information and use application information acquired by the user information acquisition unit to the learning model, and acquires the specification information output by the learning model.

**FIG. 2**

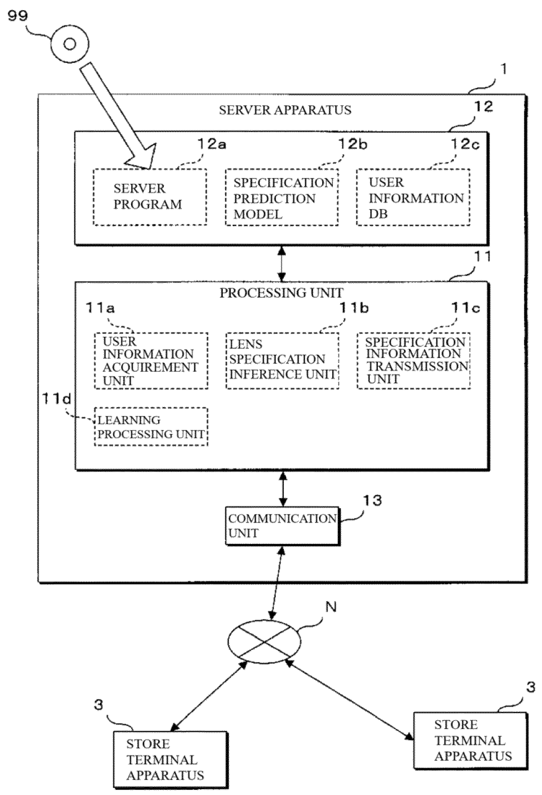




Printed by Jouve, 75001 PARIS (FR)

## Description

TECHNICAL FIELD

The present invention relates to a learning model generation method that supports selection of eyeglass lenses by a user, a computer program, an eyeglass lens selection support method, and an eyeglass lens selection support system.

BACKGROUND ART

Multifocal lenses for compensating for the decrease in the amplitude of accommodation with age are widely utilized as eyeglass lens, apart from lenses that simply correct for refractive errors (refractive power) of the eye such as nearsightedness, farsightedness, and astigmatism. A multifocal lens is obtained by deficient refractive power being added for near vision to a lower portion of the lens as addition power, and progressive power lenses in which the refractive power continuously changes in an apparently seamless manner are in widespread use.

Furthermore, various types of progressive power lenses that can be selected according to intended use are provided, such as a far-near design suitable for walking and driving by securing a wide field of vision in the upper portion for far vision, and an intermediate-near design suitable for indoor use that secures a wide intermediate distance and region for near vision compatible with deskwork and handwork. While many options are thus provided, few users have an accurate understanding features (merits and demerits) of those lenses. Generally, when getting eyeglasses made up, store staff present lens candidates based on information obtained from the user, and the user decides on a lens from among the presented candidates and purchases that lens.

JP 3-206417A proposes a method of selecting a progressive multifocal lens according to which assessment data defining individual suitabilities of a plurality of types of progressive multifocal lenses with respect to the age of the presbyope, the environment in which the eyeglasses will be worn and the like is created in advance, information such as the age of the presbyope, the use environment and the like is derived, the individual suitabilities of the progressive multifocal lenses with respect to this information are derived from the assessment data, and an optimal progressive multifocal lens for the presbyope is selected based on the derived suitabilities.

JP 2013-52095A proposes a progressive power lens selection apparatus that stores design parameters in a database for each of a plurality of types according to a lens addition power, calculates a maximum far point distance and a maximum near point distance at the time that a lens selected from the database is being worn, and displays the maximum far point distance and the maximum near point distance together on a display device with respect to the selected lens.

JP 3-206417A and JP 2013-52095A are examples of related art.

When selecting a lens, the candidates are narrowed down by rules constructed from the experience of the store staff as to what kind of lens is appropriate according to the user's needs, age, type of refractive error, and the like. A progressive power lens serving as a countermeasure for so-called presbyopia caused by a decrease in the amplitude of accommodation materializes from a trade-off between merits and demerits, since it is not optically possible to have an all-round lens for all use environments (distance, purpose, etc.), and a wrong selection will lead to feelings of discomfort and incongruity during use and dissatisfaction with the visual performance. Although knowledge and experience for lens selection are passed on through staff training, it is not easy, in practice, to formalize all aspects appropriately, and there are cases where individual skills come into play.

The method of selecting a progressive multifocal lens described in JP 3-206417A is a rule-based selection method for selecting a lens in accordance with rules defined in advance. There is a problem in that, since the extent to which the assessment results of a plurality of parameters are taken into consideration greatly affects the lens selection result, in the case where a plurality of parameters exist as factors for selecting a lens, it is difficult to define optimal rules in advance. Although the progressive power lens selection apparatus described in JP 2013-52095A supports lens selection by a user by displaying a plurality of sets of the maximum far point distance and the maximum near point distance, there is a risk that a user without specialized knowledge will be led into making the wrong selection.

The present invention has been made in view of such circumstances, and an object thereof is to provide a learning model generation method, a computer program, an eyeglass lens selection support method and an eyeglass lens selection support system that can be expected to support selection of an eyeglass lens by inferring the specifications of an eyeglass lens suitable for a user.

SUMMARY OF THE INVENTION

A learning model generation method according to the present invention includes acquiring training data in which attribute information of a user, measurement information related to eyes of the user and use application information of eyeglasses by the user are associated with specification information of an eyeglass lens, and using the acquired training data to generate a learning model that outputs the specification information in a case where the attribute information, the measurement information and the use application information are input.

Also, a computer program according to the present invention causes a computer to execute processing including acquiring attribute information of a user, measurement information related to eyes of the user and use application information of eyeglasses by the user, inputting the acquired attribute information, measurement information and use application information to a learning model that outputs specification information of an eyeglass lens in a case where the attribute information, the measurement information and the use application information are input, and acquiring the specification information output by the learning model.

Also, an eyeglass lens selection support method according to the present invention acquires attribute information of a user, measurement information related to eyes of the user and use application information of eyeglasses by the user, inputs the acquired attribute information, measurement information and use application information to a learning model that outputs specification information of an eyeglass lens in a case where the attribute information, the measurement information and the use application information are input, and acquires the specification information output by the learning model.

Also, an eyeglass lens selection support system according to the present invention includes a storage unit configured to store a learning model that outputs specification information of an eyeglass lens in a case where attribute information of a user, measurement information related to eyes of the user and use application information of eyeglasses by the user are input, a user information acquisition unit configured to acquire the attribute information, the measurement information and the use application information, and a specification information acquisition unit configured to input the attribute information, the measurement information and the use application information acquired by the user information acquisition unit to the learning model, and acquire the specification information output by the learning model.

According to the present invention, it can expect to infer the specifications of an eyeglass lens suitable for a user.

BRIEF DESCRIPTION OF THE DRAWINGS

Fig. 1 is a schematic diagram for giving an overview of an eyeglass lens selection support system according to an embodiment.

Fig. 2 is a block diagram showing a configuration of a server apparatus according to the embodiment.

Fig. 3 is a schematic diagram showing a configuration example of a user information DB.

Fig. 4 is a schematic diagram for describing a configuration example of a specification prediction model.

Fig. 5 is a schematic diagram showing a configuration example of a model for classifying specification prediction models.

Fig. 6 is a schematic diagram showing a configuration example of a model for classifying specification prediction models.

Fig. 7 is a schematic diagram for describing another configuration example of a specification prediction model.

Fig. 8 is a block diagram showing a configuration of a store terminal apparatus according to the embodiment.

Fig. 9 is a schematic diagram for describing a configuration of a testing apparatus according to the embodiment.

Fig. 10 is a block diagram showing a configuration of a tablet terminal apparatus according to the embodiment.

Fig. 11 is a schematic diagram showing an example of a screen for receiving input of attribute information and use application information that is displayed by a tablet terminal apparatus.

Fig. 12 is a flowchart showing a procedure of processing that is performed by a tablet terminal apparatus according to the embodiment.

Fig. 13 is a schematic diagram showing an example of a measurement information display screen that is displayed by the testing apparatus.

Fig. 14 is a flowchart showing a procedure of processing that is performed by the store terminal apparatus according to the embodiment.

Fig. 15 is a flowchart showing a procedure of specifications inference processing that is performed by the server apparatus according to the embodiment.

Fig. 16 is a schematic diagram showing an example of specification information display screen that is displayed by a store terminal apparatus.

Fig. 17 is a flowchart showing a procedure of processing for generating a specification prediction model that is performed by the server apparatus according to the embodiment.

Fig. 18 is a flowchart showing a procedure of processing for relearning a specification prediction model that is performed by a server apparatus according to the embodiment.

EMBODIMENTS OF THE INVENTION

A specific example of an eyeglass lens selection support system according to an embodiment of the present invention will be described below, with reference to the drawings. Note that the present invention is not limited to these illustrative examples and is defined by the claims, and all changes which come within the meaning and full range of equivalency of the claims are intended to be embraced therein.

System Overview

Fig. 1 is a schematic diagram for giving an overview of the eyeglass lens selection support system according to the present embodiment. The glass lens selection support system according to the present embodiment is constituted to be provided with a server apparatus 1, a plurality of store terminal apparatuses 3, a plurality of testing apparatuses 4, and a plurality of tablet terminal apparatuses 5. The store terminal apparatuses 3, the testing apparatuses 4, and the tablet terminal apparatuses 5 are apparatuses that are provided in stores that sells eyeglasses, and a plurality of apparatuses may be provided in one store. In contrast, the server apparatus 1 is an apparatus that is provided in a separate place to a store, and the server apparatus 1 and each store terminal apparatus 3 are able to communicate via a network N such as the Internet. The server apparatus 1 may, however, be provided in one of the stores such as the main store, for example.

The store terminal apparatus 3 provided in each store is able to communicate with the testing apparatus 4 and the tablet terminal apparatus 5 that are in the store. For example, the store terminal apparatus 3 and the testing apparatus 4 are connected via a communication cable, and communicate via this communication cable. Also, for example, the store terminal apparatus 3 and the tablet terminal apparatus 5 communicate by wireless communication such as a wireless LAN (Local Area Network). The testing apparatus 4 is an apparatus that performs refraction and visual acuity tests on users who visits the store in order to purchase eyeglasses. The testing apparatus 4 measures the refractive error (refractive power), near vision, and the like of the user's eyes, for example, and transmits measurement information related to the user's eyes to the store terminal apparatus 3. The tablet terminal apparatus 5 performs processing for receiving input of information from a user. The tablet terminal apparatus 5 receives attribute information such as the user's age and sex, for example, and use application information relating to the intended use, use environment and the like of the eyeglasses that the user is going to purchase, and transmits this information to the store terminal apparatus 3.

The store terminal apparatus 3 is an apparatus that the salesperson in the store operates, for example. The store terminal apparatus 3 acquires the measurement information related to the user's eyes from the testing apparatus 4, and acquires attribute information of the user and information on the use application of the eyeglass by the user from the tablet terminal apparatus 5. The store terminal apparatus 3 transmits the acquired measurement information, attribute information and use application information to the server apparatus 1 as one set. Thereafter, the store terminal apparatus 3 displays specification information of a lens suitable for the user inferred by the server apparatus 1 on a display or the like, and suggests an eyeglass lens suitable for the user.

The server apparatus 1 performs processing for inferring the specifications (e.g., a type, addition power, etc. of lens) of an eyeglass lens suitable for this user based on the attribute information, the measurement information and use application information of the user acquired from the store terminal apparatus 3. The server apparatus 1 transmits specification information of the lens that is the inference result to the store terminal apparatus 3. The server apparatus 1 according to the present embodiment is provided with a specification prediction model, which is a learning model learned by machine learning. This specification prediction model is learned in advance so as to output specification information of an eyeglass lens with respect to the input of the attribute information, measurement information and use application information of the user. The server apparatus 1 infers the specification of an eyeglass lens suitable for the user using this specification prediction model, by inputting the attribute information, measurement information, and use application information of the user acquired from the store terminal apparatus 3 to the specification prediction model, and acquiring specification information on the lens that is output by the specification prediction model.

Also, the server apparatus 1 performs processing for generating (learning) the specification prediction model, and relearning processing. In the initial processing for learning the specification prediction model, the server apparatus 1 performs processing for learning the specification prediction model, using training data created on the basis of the information relating to eyeglasses that have been suggested, sold or the like based on the judgment of the salesperson in the store or the like in the past, for example. The server apparatus 1 performs processing for learning the specification prediction model using the training data associated with the attribute information, measurement information and use application information of the user and the specification information on eyeglass lenses.

Also, the store terminal apparatuses 3 presents specification information on the eyeglass lens inferred by the server apparatus 1 to the user, and transmits information relating to the eyeglass lens that the user finally selects and purchases or the like to the server apparatus 1. The information that is transmitted by the store terminal apparatus 3 at this time can include the attribute information, measurement information and use application information of the user and the specification information of associated lenses, for example. Furthermore, the store terminal apparatus 3 may acquire the tracking information (e.g., information indicating returned or exchanged goods or the like, comment by users after use, etc.) about users who have purchased eyeglasses and transmit the acquired information to the server apparatus 1. The server apparatus 1 accumulates information from the store terminal apparatus 3 in a database, generates training data based on the accumulated information, and performs processing for relearning the specification prediction model using the generated training data.

Note that although the present embodiment assumes a configuration that provides the store terminal apparatus 3, the testing apparatus 4, and the tablet terminal apparatus 5 in each store as individual apparatuses, the present invention is not limited thereto. For example, the functions of the store terminal apparatus 3, the testing apparatus 4 and the tablet terminal apparatus 5 may be aggregated in one apparatus. For example, the store terminal apparatus 3 may be configured to receive input of attribute information, use application information and the like of the user, and, in this case, the tablet terminal apparatus 5 need not be provided in the store. Also, the functions of the store terminal apparatus 3 and the testing apparatus 4, for example, may be aggregated in one apparatus, and the functions of the testing apparatus 4 and the tablet terminal apparatus 5, for example, may be aggregated in one apparatus. Also, the store terminal apparatus 3 and the testing apparatus 4 may be apparatuses that the user operates rather than apparatuses that the salesperson operates. The tablet terminal apparatus 5 may be an apparatus that the salesperson in the store operates rather than an apparatus that the user operates.

Also, there may be one store rather than a plurality of stores, and, in this case, the store terminal apparatus 3 may be provided with the functions of the server apparatus 1. That is, the store terminal apparatus 3 may perform processing for inferring the specification information of a lens using a specification prediction model. Note that, in this case, the store terminal apparatus 3 may perform processing for learning the specification prediction model, and an apparatus separate from the store terminal apparatus 3 may perform learning processing. Also, the functions of the server apparatus 1, the store terminal apparatus 3, the testing apparatus 4 and the tablet terminal apparatus 5 may be aggregated in one apparatus.

A user who goes to a store in order to purchase eyeglasses first inputs attribute information such as his or her own age, sex and the like on the tablet terminal apparatus 5, and use application information such as the intended use and use environment of the eyeglasses that he or she is going to purchase. The tablet terminal apparatus 5 transmits the attribute information and use application information that were input to the store terminal apparatus 3. Next, the user undergoes refraction and eyesight tests by the testing apparatus 4. Testing by the testing apparatus 4 may be performed under the guidance of a salesperson in the store, or may be performed by the user operating the testing apparatus 4 himself or herself. In the present embodiment, the testing apparatus 4 measures at least the refractive error and/or near vision of the eyes of the user, and transmits the measurement results to the store terminal apparatus 3. The store terminal apparatus 3 transmits the attribute information and use application information of the user acquired from the tablet terminal apparatus 5 and the measurement information acquired from the testing apparatus 4 to the server apparatus 1 as one set.

The server apparatus 1 acquires the attribute information, use application information and measurement information of the user from the store terminal apparatus 3, and inputs the acquired information to the specification prediction model has been learned. The specification prediction model outputs specification information such as the type and addition power of eyeglass lenses that depends on the attribute information, use application information and measurement information that was input. The server apparatus 1 acquires the specification information that is output by the specification prediction model, and transmits the acquired information to the store terminal apparatus 3. The store terminal apparatus 3, having received the specification information from the server apparatus 1, displays information such as the type, addition power and the like of eyeglass lenses inferred by the specification prediction model as being suitable for the user, and suggests specifications of eyeglass lenses to the user. The user is, based on the specification information displayed on the store terminal apparatus 3, able to try on eyeglasses corresponding to these specifications, and the like, and select eyeglass lenses to purchase.

The server apparatus 1 associates the attribute information, use application information and measurement information acquired from the store terminal apparatus 3 with the specification information that is output by the specification prediction model with respect to this acquired information, and stores and accumulates the associated information in a database. Also, the store terminal apparatus 3 acquires the specification information of the eyeglass lens that the user finally purchased based on the specification information from the server apparatus 1, and transmits the acquired specification information to the server apparatus 1. Furthermore, the store terminal apparatus 3 acquires tracking information such as, for example, a user who purchased eyeglasses later wanting to exchange the lens, returned eyeglasses, and the user's impressions after having used the eyeglasses. The server apparatus 1 stores this information in a database.

Thereafter, the server apparatus 1 creates training data on the basis of information accumulated in the database, every time a predetermined period (e.g., one week or one month, etc.) elapses, and performs processing for relearning the specification prediction model using the created training data. Note that training data may be created automatically by the server apparatus 1, or may be created by an administrator who manages the server apparatus 1.

Apparatus Configuration

Fig. 2 is a block diagram showing the configuration of the server apparatus 1 according to the present embodiment. The server apparatus 1 according to the present embodiment is constituted to be provided with a processing unit 11, a storage unit (storage) 12, and communication unit (transceiver) 13 and the like. Note that although the present embodiment describes processing as being performed with one server apparatus 1, the processing load may be distributed among a plurality of server apparatuses 1.

The processing unit 11 is constituted using a computational processing unit such as a CPU (Central Processing Unit), an MPU (Micro-Processing Unit), or a GPU (Graphics Processing Unit). The processing unit 11 performs various types of processing by reading out and executing a server program 12a stored in the storage unit 12, such as processing for inferring the specifications of an eyeglass lens suitable for a user, processing for accumulating information related to the specifications of an eyeglass lens that is selected by a user, and processing for learning a specification prediction model based on the accumulated information.

The storage unit 12 is constituted using a mass storage device such as a hard disk, for example. The storage unit 12 stores various types of programs that are executed by the processing unit 11, and various types of data required in processing by the processing unit 11. In the present embodiment, the storage unit 12 stores the server program 12a that is executed by the processing unit 11, and a specification prediction model 12b that infers the specifications of eyeglass lenses. Also, a user information DB (database) 12c that stores information related to the specifications of the eyeglass lens selected by a user is provided in the storage unit 12. The specification prediction model 12b and the user information DB 12c will be described in detail later.

In the present embodiment, the server program 12a is provided in a mode of being recorded on a recording medium 99 such as a memory card or an optical disc, and the server apparatus 1 reads out the server program 12a from the recording medium 99 and stores the read server program 12a in the storage unit 12. Note that the server program 12a may be written to the storage unit 12 in the manufacturing stage of the server apparatus 1, for example. Also, for example, the server apparatus 1 may acquire the server program 12a distributed by another server apparatus in a remote location though communication. For example, the server program 12a recorded on the recording medium 99 may be read out and written to the storage unit 12 of the server apparatus 1 by a write apparatus. Modes in which the server program 12a is provided include being distributed via a network or recorded on the recording medium 99.

The communication unit 13 communicates with various apparatuses, via a network N including the Internet, a mobile phone communication network and the like. In the present embodiment, the communication unit 13 communicates with the plurality of store terminal apparatuses 3, via the network N. The communication unit 13 transmits data provided from the processing unit 11 to other apparatuses and provides data received from other apparatuses to the processing unit 11.

Note that the storage unit 12 may be the external storage device connected to the server apparatus 1. Also, the server apparatus 1 may be a multi-computer that is constituted to include a plurality of computers, or may be a virtual machine virtually constructed by software. Also, the server apparatus 1 is not limited to the above configuration, and may include a reading unit that reads information stored on a portable storage medium, an input unit that receives operation inputs or a display unit that displays images, for example.

Also, in the processing unit 11 of the server apparatus 1 according to the present embodiment, as a result of the processing unit 11 reading out and executing the server program 12a stored in the storage unit 12, a user information acquisition unit 11a, a lens specification inference unit 11b, a specification information transmission unit 11c, a learning processing unit 11d, and the like are realized as software-based functional units. Note that these functional units are functional units relating to processing for inferring the specifications of eyeglass lenses, and illustration and description of other unrelated functional units will be omitted.

The user information acquisition unit 11a performs processing for acquiring information such as attribute information, use application information and measurement information of the user from the store terminal apparatus 3, by communicating with the store terminal apparatus 3 through the communication unit 13. In the eyeglass lens selection support system according to the present embodiment as mentioned above, attribute information and use application information input by the user with the tablet terminal apparatus 5 and measurement information regarding the results of tests performed on the user by the testing apparatus 4 are acquired with the store terminal apparatus 3. The user information acquisition unit 11a acquires this information acquired by the store terminal apparatus 3 from the store terminal apparatus 3 through communication. The user information acquisition unit 11a stores the acquired attribute information, use application information, measurement information of the user and the like in the user information DB 12c of the storage unit 12. Also, the user information acquisition unit 11a acquires the results of an eyeglass selection by the user and information relating to whether or not there was a subsequent enquiry or return from the use who purchased the eyeglasses, and stores the acquired results and information in the user information DB 12c.

The lens specification inference unit 11b, based on the attribute information, use application information and measurement information of the user acquired by the user information acquisition unit 11a, performs processing for inferring the specifications of an eyeglass lens suitable for this user. In the present embodiment, the lens specification inference unit 11b infers the specifications of a lens, using the machine-learned specification prediction model 12b stored in the storage unit 12. The lens specification inference unit 11b infers the specifications of an eyeglass lens suitable for the user, by inputting the attribute information, use application information and measurement information acquired by the user information acquisition unit 11a to the specification prediction model 12b, and acquiring the specification information of lenses that is output by the specification prediction model 12b.

The specification information transmission unit 11c performs processing for transmitting the specification information of the lens inferred by the lens specification inference unit 11b as a lens specification inference result to the store terminal apparatus 3 that transmitted the attribute information, use application information and measurement information of the user.

The learning processing unit 11d performs processing for learning the specification prediction model 12b that infers the specifications of an eyeglass lens suitable for the user. The learning processing unit 11d, at the stage of initially learning the specification prediction model 12b, that is, at the stage of generating the specification prediction model 12b, performs learning processing using training data created in advance by an administrator or developer of the system. The training data that is used at this time can be created based on the specification information of eyeglass lenses previously sold in a store or the like that sell lenses and information relating to the users who purchased the lenses. Also, the learning processing unit 11d may perform re-learning of the specification prediction model 12b using data accumulated through operation of the system. Note that an apparatus other than the server apparatus 1 may perform the processing for learning the specification prediction model 12b, in which case the server apparatus 1 need not be provided with the learning processing unit 11.

Fig. 3 is a schematic diagram showing a configuration example of the user information DB 12c. Information such as "username", "attribute information", "use application information", "measurement information", "inferred specification information", "purchase specification information", "tracking information" and the like are stored in association with each other in the user information DB 12c provided in the storage unit 12 of the server apparatus 1 according to the present embodiment. The "username" may be the name (real name) of a user who visited the store or may be identification information such as a user ID given to the user, for example. The "username" may be any information capable of uniquely identifying users.

"Attribute information" is personal information of the user, and is, for example, information such as the "age" and "sex" of the user. Also, the "attribute information" may include various information such as occupation, hobbies and any chronic diseases. In the present embodiment, the "attribute information" is information input by the user himself or herself at the store using the tablet terminal apparatus 5.

"Use application information" is information relating to the use application of the eyeglass that the user is going to purchase, and can include information such as "distance", "driving" and "indoors/outdoors". "Distance" is the distance to the object that will be viewed using the eyeglasses, and information such as far distance that places importance on outdoor use of the eyeglasses, intermediate distance that places importance on watching TV indoors, working on a personal computer and the like, and near distance that places importance on operating a smartphone, reading and the like, for example, can be set. "Driving" is information indicating whether the user will use the eyeglasses when driving a car. "Indoors/outdoors" is information indicating whether there is a high possibility that the user will use the eyeglasses either indoors or outdoors. In the present embodiment, "use application information" is information input by the user himself or herself at the store using the tablet terminal apparatus 5.

"Measurement information" is information that is based on the results of tests on the eyes of the user performed at the store using the testing apparatus 4, and, for example, can include information such as "refractive error (refractive power)" and "near vision" of the eyes of the user. "Refractive error" is information on the change in the refractive power of the eyes in three orientational directions, namely, horizontal, vertical and 45-degree orientation, for example. "Near vision" is the visual acuity when viewing something close around 30 cm away, for example. Also, "measurement information" can also include various information such as far vision, pupillary distance and eye position (ocular deviation).

"Inferred specification information" is information relating to the specifications of an eyeglass lens inferred by the server apparatus 1 based on the attribute information, use application information and measurement information of the user, and, for example, can include information such as "lens type" and "addition power". "Lens type" can be set to types of lenses such as single vision lens, typical distance-near progressive type, intermediate-near focused distance-near progressive type, and indoor type, for example. "Addition power" is the difference between the power of the lens for viewing long distance and the power of the lens for viewing close up with distance-near type (progressive power lens) eyeglasses, and in the case where the lens type is the distance-near type, the value of the addition power is set.

"Purchase specification information" is information relating to the specifications of eyeglass lenses that users have actually purchased, and can include the same information items as "inferred specification information". In the case where a user purchases eyeglasses having the lens specifications inferred by the server apparatus 1, the same information is set for "purchase specification information" and "inferred specification information". In the present embodiment, "purchase specification information" is information that the salesperson of the store inputs using the store terminal apparatus 3, for example.

"Tracking information" is subsequent information regarding users who have purchased eyeglasses, and, for example, can include information on whether purchased eyeglasses have been returned or exchanged, users' impressions after having used the eyeglasses, the existence of any complaints, and the like. Also, if the "tracking information" contains no requests for exchange or the like from the user within a predetermined period after purchase, for example, it is judged that the specification information of a lens inferred for that user were correct, and this fact is stored as tracking information. In the present embodiment, "tracking information" is information that the salesperson in the store inputs using the store terminal apparatus 3, for example.

The server apparatus 1 stores and accumulates information acquired from the store terminal apparatus 3 of each store in the user information DB 12c.

Fig. 4 is a schematic diagram for describing a configuration example of the specification prediction model 12b. The specification prediction model 12b with which the server apparatus 1 according to the present embodiment is provided is a learning model generated by learning processing such as machine learning or deep learning performed in advance. A learning model performs a predetermined computational operation on an input value and outputs a computation result, and data such as coefficients and thresholds of functions defining this computational operation is stored in the storage unit 12 as the specification prediction model 12b. The specification prediction model 12b according to the present embodiment is machine learned in advance, so as to output an eyeglass lens type and addition power suitable for the user as specification information with respect to input of the attribute information, use application information and measurement information of the user.

Also, in the present embodiment, the specification prediction model 12b is constituted to be provided with two learning models, namely, a classification model 101 and a regression model 102. The classification model 101 is a learning model that outputs the type of eyeglass lens suitable for this user with respect to the input of the attribute information, use application information and measurement information of the user. The classification model 101 performs classification prediction of a type of lens that is highly compatible with the user based on input information. Also, the regression model 102 is a learning model that outputs an addition power of an eyeglass lens suitable for the user with respect to the input of the attribute information, use application information and measurement information of the user. In the present embodiment, the regression model 102 performs regressive prediction of the addition power of the lens for a user for whom the classification model 101 predicts that typical distance-near type (progressive power lens) is suitable. Note that a decision tree (classification tree and recursive tree) learning model can be adopted as the classification model 101 and the regression model 102, for example. However, a learning model such as an SVM (Support Vector Machine) or a neural network, for example, may be adopted for the classification model 101 and the regression model 102.

In the initial learning processing (generation processing) of the classification model 101 and the regression model 102 of the specification prediction model 12b, training data for learning created on the basis of, for example, the specification information of eyeglass lenses previously sold at a plurality of stores and the attribute information, use application information and measurement information of users who have purchased eyeglasses. Information relating to the eyeglass previously sold is information relating to lenses selected based on the knowledge and experience of salespersons in the stores and the like, and as result of learning processing being performed using training data created on the basis of this information, the specification prediction model 12b can be generated as a learning model that incorporates the knowledge and experience of salespersons in the stores and the like through learning. Information relating to the correctness of selections made by the salespersons may be added to the training data with regard to lenses selected for users, by attaching a positive label if problems do not arise in subsequent use of the eyeglasses and attaching a negative label if problems do arise.

Figs. 5 and 6 are schematic diagrams showing a configuration example of the classification model 101 of the specification prediction model 12b. For example, the classification model 101 can be configured as a learning model that outputs a compatibility for types of lenses such as single vision lens, typical distance-near progressive type, intermediate-near focused distance-near progressive type, and indoor type, with respect to input of the attribute information, use application information and measurement information of the user, as shown in Fig. 5. The output of the classification model 101 is output as a fractional value from 0.00 to 1.00 for every type of lens, for example, and the type of lens with respect to which the largest numerical value is output is inferred as the type of lens suitable for that user. Also, in the case of providing a plurality of candidates, a first candidate, a second candidate and so on can be designated in order of the numerical values.

Also, for example, the classification model 101 may be generated as a plurality of classification models 101a to 101d for every type of lens, as shown in Fig. 6. The classification models 101a to 101d each output, for a different one of the plurality of lens, the compatibility of that lens for the user as a fractional value from 0.00 to 1.00.

Also, although not illustrated, the regression model 102 may be similarly generated as one learning model, or may be generated as separated learning models for every type of lens.

Fig. 7 is a schematic diagram for describing another configuration example of the specification prediction model 12b. In the example shown in Fig. 7, the specification prediction model 12b has the structure of a neural network in which a plurality of neurons are mutually combined. While this is existing technology and a detailed description will thus be omitted, neurons are elements that perform a computational operation on a plurality of inputs and output one value as an operation result. The neurons have information such as weighting coefficients, threshold values and the like that are used in the computational operation. The learning model of the neural network is provided with an input layer for receiving input of one or a plurality of data, an intermediate layer for performing computational operation processing on data received in the input layer, and an output layer for aggregating the computational operation results of the intermediate layer and outputting one or a plurality of values. Learning processing by deep learning is processing for setting appropriate values for the coefficients, threshold values and the like of the respective neurons constituting the neural network, using a large amount of learning data provided in advance. The specification prediction model 12b of this example is a learned model generated by deep learning that uses training data on the learning model of the neural network, and is learning performed by a technique such as gradient descent, stochastic gradient descent or backpropagation, for example.

The specification prediction model 12b receives input of the attribute information, use application information and measurement information of the user, and outputs the type and addition power of the lens that is inferred as being suitable for that user. Note that the specification prediction model 12b may separately output the type and addition power of the lens, or may output the type and addition power of the lens as a set. The learning processing of the specification prediction model 12b is performed using the attribute information, use application information and measurement information of the user and the training data with which the type and addition power of the lens are associated.

Also, regardless of the configuration of learning model that is adopted as the specification prediction model 12b, the server apparatus 1 is able to accumulate the attribute information, use application information and measurement information of the user and information on the type and addition power of the lens with operation of the present system, and perform processing for re-learning the specification prediction model 12b using the accumulated information. The accuracy of prediction by the specification prediction model 12b can thereby be enhanced with operation of the system.

Fig. 8 is a block diagram showing the configuration of the store terminal apparatus 3 according to the present embodiment. The store terminal apparatus 3 according to the present embodiment is constituted to be provided with a processing unit 31, a storage unit (storage) 32, a communication unit (transceiver) 33, a display unit (display) 34, an operation unit 35, and the like. The processing unit 31 is constituted using a computational processing unit such as a CPU or an MPU. The processing unit 31 performs various processing by reading out and executing a program 32a stored in the storage unit 32, such as processing for acquiring the attribute information, use application information and measurement information of the user, and processing for outputting the specification information of an eyeglass lens suitable for a user.

The storage unit 32 is constituted using a magnetic storage device such as a hard disk or a nonvolatile memory device such as a flash memory, for example. The storage unit 32 stores various types of programs that are executed by the processing unit 31, and various types of data required in processing by the processing unit 31. In the present embodiment, the storage unit 32 stores the program 32a that is executed by the processing unit 31. In the present embodiment, the program 32a is distributed by a remote server apparatus or the like, and the store terminal apparatus 3 acquires the distributed program through communication, and stores the program in the storage unit 32. Note that the program 32a may be written to the storage unit 32 at the manufacture stage of the store terminal apparatus 3, for example. For example, the store terminal apparatus 3 may read the program 32a recorded on a recording medium such as a memory card or an optical disc and the program 32a may be stored in the storage unit 32. For example, the program 32a recorded on a recording medium may be read out and written in the storage unit 32 of the store terminal apparatus 3 by a write apparatus. Modes in which the program 32a may be provided include being distributed via a network and being recorded on a recording medium.

The communication unit 33 communicates with various apparatuses via a network N including the Internet, a mobile phone communication network and the like. In the present embodiment, the communication unit 33 communicates with the server apparatus 1, the testing apparatuses 4, the tablet terminal apparatuses 5 and the like via the network N. The communication unit 33 transmits data provided from the processing unit 31 to other apparatuses, and provides data received from other apparatus to the processing unit 31.

The display unit 34 is constituted using a liquid crystal display or the like, and displays various images, characters, and the like based on processing by the processing unit 31. In the present embodiment, the display unit 34 is used in order to display the result of inferring the specification information of an eyeglass lens suitable for the user by the server apparatus 1.

The operation unit 35 receives operation by a salesperson in the store or the like, and notifies the received operations to the processing unit 31. For example, the operation unit 35 receives operations by a salesperson or the like with an input device such as a mechanical button or a touch panel provided on the surface of the display unit 34. Also, for example, the operation unit 35 may be input devices such as a mouse and a keyboard, and these input devices may be constituted to be removable from the store terminal apparatus 3.

Also, in the store terminal apparatus 3 according to the present embodiment, as a result of the processing unit 31 reading out and executing the program 32a stored in the storage unit 32, an attribute information acquisition unit 31a, a use application information acquisition unit 31b, a measurement information acquisition unit 31c, a user information transmission unit 31d, an inference result output unit 31e and the like are realized by the processing unit 31 as software-based functional units. The attribute information acquisition unit 31a performs processing for acquiring attribute information such as age, sex, and the like input to the tablet terminal apparatus 5 by the user, by communicating with the tablet terminal apparatus 5 through the communication unit 33. Similarly, the use application information acquisition unit 31b performs processing for acquiring the use application information input by the user to the tablet terminal apparatus 5, by communicating with the tablet terminal apparatus 5 through the communication unit 33.

The measurement information acquisition unit 31c performs processing for acquiring measurement information such as the refractive error, near vision and the like of the user measured with the testing apparatus 4, by communicating with the testing apparatus 4 through the communication unit 33. The user information transmission unit 31d performs processing for transmitting the attribute information acquired by the attribute information acquisition unit 31a, the use application information acquired by the use application information acquisition unit 31b and the measurement information acquired by the measurement information acquisition unit 31c in association with each to the server apparatus 1 as user information. The inference result output unit 31e acquires the specification information of an eyeglass lens suitable for this user that the server apparatus 1 transmits with respect to the user information that the user information transmission unit 31d transmitted, and performs processing for outputting (displaying) the acquired specification information in the display unit 34.

Fig. 9 is a schematic diagram for describing the configuration of the testing apparatus 4 according to the present embodiment. The illustrated testing apparatus 4 is an apparatus for measuring the refraction characteristics (refractive error) of the eyes of the user. The testing apparatus 4 is constituted to be provided with a processing unit 41, an operation unit 42, measurement eyeglasses 43, a base 46, a light emitting unit 47, a distance sensor 48 and the like. The measurement eyeglasses 43 is constituted to support a disk 44 has a first pinhole and a second pinhole (illustration is omitted) that narrow and pass incident light with an eyeglass frame 45. The measurement eyeglasses 43 is worn by a user serving as a subject of measurement.

The light emitting unit 47 is a display connected to the processing unit 41, for example, and emits a first light and a second light, such that the light that passes through the first pinhole and the light that passes through the second pinhole of the measurement eyeglasses 43 are incident on the eyes of the user at the same time. The processing unit 41 is constituted using a computer, and performs processing for calculating the refraction characteristics (refractive error) of the eye from information on an arrival position at which the first light that passed through the first pinhole and the second light that passed through the second pinhole reach the retina of the eyes of the user. The operation unit 42, the light emitting unit 47 and the distance sensor 48 are connected to the processing unit 41.

The operation unit 42 is constituted using input devices such as a keyboard and a mouse, for example, and receives operations by the user such as for changing the arrangement direction or position shift of a light emission portion of the light emitting unit 47. The user performs an operation for changing the amount of position shift of the light emission portion of the light emitting unit 47 utilizing the operation unit 42, such that an image of the light emission portion of the light emitting unit 47 that can be seen through the measurement eyeglasses 43 is not position shifted. The processing unit 41 adjusts the emitted position of the first light and the second light by the light emitting unit 47 according to input by the user to the operation unit 42.

The base 46 is a stand for the user to rest his or her face on, such that the eyes of the user is arranged in a predetermined position. As a result of the user resting his or her face on the base 46, the eyes of the user are positioned to be in a predetermined location suitable for measurement. The distance sensor 48 is a sensor that measures the distance from the light emitting unit 47 to the disk 44, and can, for example, be constituted using a laser range finder or the like. The distance sensor 48 provides the measured distance to the processing unit 41.

The processing unit 41 calculates a refractive power (refractive error) K of the user using the following equation (1), based on an adjustment amount a of position shift by the user received as an input by the operation unit 42, a distance d from the light emitting unit 47 to the disk 44 measured by the distance sensor 48, and a distance h between the first pinhole and the second pinhole formed in the disk 44.

$$K = D \times (h-a)/h \qquad (1)$$

where D = 1000/d

Also, the processing unit 41 is capable of communicating with the store terminal apparatus 3, and transmits the calculated refractive power (refractive error) of the user to the store terminal apparatus 3. Note that, in this example, the testing apparatus 4 is described as having a configuration for measuring the refractive error of the user, but the present invention is not limited thereto. The testing apparatus 4 may, for example, be an apparatus that measures the near vision of the user, or may be an apparatus that measures other characteristics of the eye. Also, the testing apparatus 4 may, for example, be constituted to be provided with two or more apparatuses such as an apparatus that measures the refractive error and an apparatus that measures near vision, or may be an apparatus capable of performing a plurality of types of measurement of the refractive error, near vision, and the like with one apparatus.

Fig. 10 is a block diagram showing the configuration of the tablet terminal apparatus 5 according to the present embodiment. The tablet terminal apparatus 5 according to the present embodiment is constituted to be provided with a processing unit 51, a storage unit (storage) 52, a communication unit (transceiver) 53, a display unit (display) 54, an operation unit 55, and the like. The processing unit 51 is constituted using a computational processing apparatus such as a CPU or an MPU. The processing unit 51 performs various processing by reading out and executing the program 52a stored in the storage unit 52 such as processing for receiving input of attribute information and use application information of the user, and processing for transmitting information whose input was received to the store terminal apparatus 3.

The storage unit 52 is constituted using a magnetic storage device such as a hard disk or a nonvolatile memory device such as a flash memory, for example. The storage unit 52 stores various types of programs that are executed by the processing unit 51 and various types of data required in processing by the processing unit 51. In the present embodiment, the storage unit 52 stores the program 52a that is executed by the processing unit 51. In the present embodiment, the program 52a is distributed by a remote server apparatus or the like, the tablet terminal apparatus 5 acquires the program 52a through communication, and the program 52a stores the received program 52a in the storage unit 52. Note that the program 52a may be written in the storage unit 52, for example, in the manufacturing stage of the tablet terminal apparatus 5. For example, the tablet terminal apparatus 5 may read out the program 52a recorded on a recording medium such as a memory card or an optical disc, and store by the program 52a in the storage unit 52. For example, a write apparatus may read out and execute the program 52a recorded on a recording medium, and write the program 52a to the storage unit 52 of the tablet terminal apparatus 5. Modes in which the server program 52a is provided include being distributed via a network or recorded on the recording medium.

The communication unit 53 communicates with various apparatuses, via a network N including the Internet, a mobile phone communication network and the like. In the present embodiment, the communication unit 53 communicates with the store terminal apparatus 3 via the network N. The communication unit 53 transmits data provided from the processing unit 51 to other apparatuses, and provides data received from other apparatus to the processing unit 51.

The display unit 54 is constituted using a liquid crystal display or the like, and displays various images, characters, and the like based on processing by the processing unit 51. In the present embodiment, the display unit 54 is used in order to display a screen for receiving input of attribute information and use application information of the user.

The operation unit 55 receives an operation by the user, and notifies the received operation to the processing unit 51. For example, the operation unit 55 receives an operation by the user with input devices such as a mechanical button or a touch panel provided on the surface of the display unit 54. Also, for example, the operation unit 55 may be input devices such as a mouse and a keyboard, and these input devices may be constituted to be removable with respect to the tablet terminal apparatus 5.

Also, in the tablet terminal apparatus 5 according to the present embodiment, as a result of the processing unit 51 reading out and executing the program 52a stored in the storage unit 52, a display processing unit 51a, an input reception unit 51b, an information transmission unit 51c and the like may be realized by the processing unit as software-based functional units. The display processing unit 51a performs processing for displaying an input screen for receiving the input of attribute information and use application information from the user on the display unit 54. The input reception unit 51b performs processing for receiving input of attribute information and use application information by the user, based on operations performed on the operation unit 55 when the input screen is displayed on the display unit 54. The information transmission unit 51c performs processing for transmitting attribute information and use application information of the user whose input was received by the input reception unit 51b to the store terminal apparatus 3 through the communication unit 53.

Eyeglass Lens Selection Support Processing

A user who visits the store in order to purchase eyeglasses first inputs attribute information such as his or her age and sex and use application information such as the intended use and use environment of the eyeglasses he or she is going to purchase, with the tablet terminal apparatus 5. At this time, the tablet terminal apparatus 5 displays a screen for receiving input of attribute information and use application information on the display unit 54. Fig. 11 is a schematic diagram showing an example of the input reception screen for attribute information and use application information that is displayed by the tablet terminal apparatus 5. On the upper part of the illustrated input reception screen, an input box for receiving input of a name, an input box for receiving input of age, and radio buttons (option buttons) for receiving selection of either male or female as the sex are provided downward of the message "Please answer the following questions". Furthermore, downward thereof, a message "Have you used eyeglasses before?" is provided together with radio buttons for receiving selection as to whether or not the user has used eyeglasses, and a message "Have you used progressive power lenses?" is provided together with radio buttons for receiving selection as to whether or not the user has used progressive power lenses. The tablet terminal apparatus 5 receives input of attribute information of the user with these input boxes and radio buttons provided on the upper part of the input reception screen.

On the lower part of the input reception screen, radio buttons for receiving selection relating to how the user will use the eyeglasses and radio buttons for receiving selection of whether the eyeglasses will be used when driving a car are provided. How the user will use the eyeglasses is received through selection from among the three options "far vision when outside", "when on the computer and indoors" and "reading and looking at smartphone screen", provided downward of the message "What will you be mainly using them for?" Whether the eyeglasses will be used when driving is received through selection of the options "Yes" and "No" provided together with the message of "Will you be using them when driving?" The tablet terminal apparatus 5 receives input of use application information of the user with these radio buttons provided on the lower part of the input reception screen.

The tablet terminal apparatus 5 displays the input reception screen of Fig. 11 on the display unit 54, and reflects the input to each item based on the operation in the operation unit 55. The tablet terminal apparatus 5 receives input of the final information of the user regarding each item on the input reception screen, and transmits attribute information of the user and use application information to the store terminal apparatus 3, in response to operation of a Finish button provided on the lowermost part of the input reception screen.

Fig. 12 is a flowchart showing a procedure of processing that is performed by the tablet terminal apparatus 5 according to the present embodiment. The display processing unit 51a of the processing unit 51 of the tablet terminal apparatus 5 according to the present embodiment displays the input reception screen shown in Fig. 11 on the display unit 54 (step S1). The input reception unit 51b of the processing unit 51 determines whether input of information by the user is completed, according to whether the Finish button on the input reception screen has been pressed (step S2). If input is not completed (S2: NO), the processing unit 51 returns processing to step S1, and continues display of the input reception screen.

If input of information by the user is completed (S2: YES), the input reception unit 51b acquires information input to each item of the input reception screen (step S3). The information transmission unit 51c of the processing unit 51 transmits the information received in step S3 to the store terminal apparatus 3 as attribute information and use application information of the user (step S4), and ends the processing.

The user who has finished inputting attribute information and use application information with the tablet terminal apparatus 5 undergoes measurement of refractive error, near vision and the like by the testing apparatus 4. Testing by the testing apparatus 4 may be performed under the guidance of a salesperson in the store, or may be performed by the user operating the testing apparatus 4 himself or herself. For example, the user measures the refractive error with the testing apparatus 4 of configuration shown in Fig. 9. The user puts on the measurement eyeglasses 43 of the testing apparatus 4, and rests his or her face on the base 46, and looks at the light emitting unit 47 through the first pinhole and the second pinhole formed in the disk 44 of the measurement eyeglasses 43. The user performs an operation for adjusting position shift of the light emission image that is based on the first light and second light that are emitted from the light emitting unit 47 by the operation unit 42. The testing apparatus 4 calculates the refractive error based on the amount of adjustment by the user, and displays measurement results on a display or the like.

Fig. 13 is a schematic diagram showing an example of the measurement information display screen that is displayed by the testing apparatus 4. On the illustrated measurement information display screen, a message "Your refractive error measurement result" is displayed on the uppermost part, and the measurement results of refractive error for the right eye and the left eye are displayed downward thereof. In this example, as the measurement results for refractive error, measurement results such as a spherical power S, a cylindrical (astigmatic) power C, and an astigmatic axis AX, for example, are respectively shown for the right eye and the left eye.

The testing apparatus 4 displays a measurement information display screen of Fig. 13 on a display or the like, after finishing measurement of the refractive error of the user. The testing apparatus 4 transmits these measurement results to the store terminal apparatus 3 as the measurement information of the user, in the case where operation of an OK button provided on the lowermost part of the measurement information display screen is received.

Fig. 14 is a flowchart showing a procedure of processing that is performed by the store terminal apparatus 3 according to the present embodiment. The attribute information acquisition unit 31a and the use application information acquisition unit 31b of the processing unit 31 of the store terminal apparatus 3 according to the present embodiment acquire the attribute information and use application information that are transmitted from the tablet terminal apparatus 5 (step S11). Next, the measurement information acquisition unit 31c of the processing unit 31 acquires the measurement information transmitted from the testing apparatus 4 (step S12). The user information transmission unit 31d of the processing unit 31 transmits the attribute information and use application information acquired in step S11 and the measurement information acquired in step S12 to the server apparatus 1 (step S13).

The inference result output unit 31e of the processing unit 31 determines whether specification information of eyeglasses that is transmitted by the server apparatus 1 in response to the information transmission of step S13 has been received (step S14). If specification information has not been received (S14: NO), the inference result output unit 31e stands by until specification information is received from the server apparatus 1. If specification information of eyeglasses has been received from the server apparatus 1 (S14: YES), the inference result output unit 31e displays the received specification information on the display unit 34 as a candidate of an eyeglass lens suitable for the user (step S15).

Thereafter, the processing unit 31 determines, with regard to the specification information of the lens displayed as a candidate, whether the user has selected the candidate as the specifications of eyeglasses that he or she will purchase (step S16). If the displayed candidate lens is not selected by the user (S16: NO), the processing unit 31 acquires the specification information of the lens serving as the next candidate (step S17), returns processing to step S15, and displays the specification information relating to the next candidate. If the displayed candidate lens is selected by the user (S16: YES), the processing unit 31 ends the processing. Note that, in the case where the specifications of lenses relating to a plurality of candidates are included in the specification information received from the server apparatus 1 in step S14, the processing unit 31 is able to acquire the specifications of the next candidate from the received specification information. In contrast, in the case where a plurality of candidates are not included in the specification information received from the server apparatus 1, the processing unit 31 requests the server apparatus 1 to transmit specification information of a lens to serve as the next candidate, and the server apparatus 1, in response to this request, transmits the specification information of the next candidate to the store terminal apparatus 3.

Fig. 15 is a flowchart showing a procedure of specification inference processing that is performed by the server apparatus 1 according to the present embodiment. The user information acquisition unit 11a of the processing unit 11 of the server apparatus 1 according to the present embodiment acquires the attribute information, use application information and measurement information of the user that is transmitted by the store terminal apparatus 3 (step S21). The user information acquisition unit 11a stores the information acquired in step S21 in the user information DB 12c of the storage unit 12 (step S22).

The lens specification inference unit 11b of the processing unit 11 inputs the attribute information, use application information and measurement information of the user acquired in step S21 to the specification prediction model 12b (step S23). The lens specification inference unit 11b acquires the specification information (type and addition power of lens) that is output by the specification prediction model 12b in response to the information input of step S23 (step S24). The lens specification inference unit 11b stores the specification information acquired in step S24 as inferred specification information in the user information DB 12c of the storage unit 12 (step S25). The specification information transmission unit 11c of the processing unit 11 transmits the specification information of the lens acquired in step S24 to the store terminal apparatus 3 (step S26), and ends the processing.

Fig. 16 is a schematic diagram showing an example of a specification information display screen that is displayed by the store terminal apparatus 3. On the illustrated specification information display screen, a message "Your recommended lens is:" is displayed on the uppermost part, and therebelow images showing the respective shapes in simplified form are displayed for four types of lens, namely, single vision lens, typical distance-near progressive type, intermediate-near focused distance-near progressive type, and indoor (intermediate-near) type. In the specification information display screen, one lens type is shown in a selected state according to the specification information from the server apparatus 1. In this diagram, the selected state is represented by enclosing the lens type and description thereof with a bold line.

Also, on the specification information display screen, the addition power is shown according to the specification information from the server apparatus 1, in the case where the typical distance-near type (progressive power lens) is selected. In the illustrated example, the value 1.50D is shown as the addition power of the typical distance-near type. Also, on the specification information display screen, a brief explanatory note relating to the selected lens type is displayed. In the illustrated example, the text "Covers wide range from distance to close-up vision" and "Also recommended for outdoor activities" are displayed as the explanatory note of the typical distance-near type.

The store terminal apparatus 3 displays, on the display unit 54, the specification information display screen on which the lens type inferred as being suitable for the user is selected, based on the specification information of the lens received from the server apparatus 1. Also, the store terminal apparatus 3 shows the inference value of the addition power that is included in the specification information on the specification information display screen, in the case where the typical distance-near type (progressive power lens) is inferred as being suitable in the specification information.

Also, on the lowermost part of the specification information display screen, a button labeled "Select recommended type of lens" and a button labeled "Select different type of lens" are provided. The store terminal apparatus 3, in the case where an operation on the "Select recommended type of lens" button is received, performs subsequent processing assuming that the lens of the lens type and addition power shown on the specification information display screen was selected by the user. As subsequent processing, processing can, for example, be performed to notify the result of the selection by the user to the salesperson in the store, and to prompt the offer of some eyeglasses to try out or to display the estimated price of eyeglasses with the selected lens.

Also, the store terminal apparatus 3, in the case where an operation on the "Select different type of lens" button is received, displays the specification information display screen showing the specification information of a second candidate lens, for example. The server apparatus 1 may include specification candidates of a plurality of lenses in the specification information based on numerical values that are output by the specification prediction model 12b, in which case the store terminal apparatus 3 displays information of the second candidate that is included in the specification information received from the server apparatus 1. Alternately, the store terminal apparatus 3 may request specification information of a second candidate lens from the server apparatus 1, and the server apparatus 1 may infer the specifications of the lens serving as the second candidate according to this request, and transmit specification information to the store terminal apparatus 3.

For example, the server apparatus 1, in the case where the specification prediction model 12b outputs numerical values such as the compatibility or recommendability for the user with regard to the type of each lens, these numerical values may be designated as a first candidate, a second candidate, and so on in descending order of this numerical value. The server apparatus 1 transmits the specification information to include the information of a plurality of candidates with regard to candidates within a predetermined ranking range up the top three, for example, or to include information of a plurality of candidates with regard to candidates whose numerical value for compatibility exceeds a predetermined threshold value. The store terminal apparatus 3, in the case where the information of a plurality of candidates is included in the specification information received from the server apparatus 1, present the specifications of the lenses to the user on the specification information display screen sequentially in descending order from the highest ranked candidate, and, in the case where the user does not select this lens, presents the specifications of the next candidate lens to the user on a similar specification information display screen. Note that the store terminal apparatus 3 may, for example, present the specification information of a plurality of candidates to the user on the specification information display screen, in which case a plurality of candidates may be displayed in ranked order.

The user is able to select a lens based on the specifications recommended on the specification information display screen of the store terminal apparatus 3, and, for example, try out a pair of eyeglasses having this lens. The user is able to decide to purchase those eyeglasses if satisfied with the eyeglasses he or she tried on, and to repeatedly try on eyeglasses with different lens specifications in order of the second candidate, the third candidate and so on if not satisfied with the eyeglasses he or she tried on.

Learning Processing

Fig. 17 is a flowchart showing a procedure of processing for generating the specification prediction model 12b that is performed by the server apparatus 1 according to the present embodiment. The learning processing unit 11d of the processing unit 11 of the server apparatus 1 according to the present embodiment acquires training data created in advance by the designer of the system or the like in which attribute information, use application information and measurement information of users are associated with the specification information of eyeglass lenses (step S31). The learning processing unit 11d performs supervised learning processing on a learning model prepared in advance, using the training data acquired in step S31 (step S32). The learning processing unit 11d stores the learned learning model that was learned by the learning processing of step S32 in the storage unit 12 as the specification prediction model 12b (step S33), and ends generation processing.

Fig. 18 is a flowchart showing a procedure of processing for relearning the specification prediction model 12b that is performed by the server apparatus 1 according to the present embodiment. The processing unit 11 of the server apparatus 1 according to the present embodiment acquires the specification information of the eyeglass lenses finally purchased by the user from the store terminal apparatus 3, and stores the acquired information in the user information DB 12c of the storage unit 12 as purchase specification information (step S41). Also, the processing unit 11 acquires tracking information regarding the existence of inquiries, returns, exchanges, complaints and the like by users who have purchased eyeglasses from the store terminal apparatus 3, and stores the acquired tracking information in the user information DB 12c of the storage unit 12 (step S42). The processing unit 11 determines whether accumulation of a sufficient amount of information for relearning in the user information DB 12c is completed (step S43). In the case where accumulation of sufficient information is not completed (S43: NO), the processing unit 11 returns to step S41 and continues accumulation of information.

In the case where accumulation of sufficient information is completed (S43: YES), the learning processing unit 11d of the processing unit 11 creates training data for re-learning based on the information stored in the user information DB 12c (step S44). At this time, the learning processing unit 11d is able to create the training data by associating the attribute information, use application information and measurement information of users with purchase specification information stored in the user information DB 12c, for example. Also, for example, the learning processing unit 11d, in the case where the inferred specification information differs from the purchase specification information, may use the inferred specification information as training data with a negative label attached thereto. Also, for example, the learning processing unit 11d may use purchase specification information with respect to which there has been a return, exchange or the like based on the tracking information as training data with a negative label attached thereto.

The learning processing unit 11d reads out the specification prediction model 12b stored in the storage unit 12 (step S45). The learning processing unit 11d performs processing for re-learning the specification prediction model 12b read in step S45 using the training data created in step S44 (step S46). The learning processing unit 11d updates the specification prediction model 12b by storing the specification prediction model 12b subjected to relearning in step S46 in the storage unit 12 (step S47), and ends the processing.

Conclusion

In the eyeglass lens selection support system according to the present embodiment having the above configuration, the server apparatus 1 predicts the specifications of an eyeglass lenses suitable for the user, by acquiring the attribute information, use application information and measurement information of the user from the store terminal apparatus 3, inputting the acquired information to the specification prediction model 12b, and acquiring the specification information of an eyeglass lens that is output by the specification prediction model 12b. The specification prediction model 12b is a learning model generated by learning performed in advance using training data in which the attribute information, use application information and measurement information of users are associated with the specification information of eyeglass lenses. The eyeglass lens selection support system is thereby able to infer the specifications of an eyeglass lens suitable for the user and present the inferred specifications to the user, and it can be expected to support selection of eyeglass lenses by the user.

Also, in the eyeglass lens selection support system according to the present embodiment, the attribute information that is input to the specification prediction model 12b includes information on the age of the user, and the measurement information includes the measurement result of the refractive error of the eyes. The age of the user can be a factor in presbyopia, and the correlation between visual acuity and refractive error of the user is evident from previous studies, and thus by taking the age and refractive error of the user as input information, the eyeglass lens selection support system can be expected to realize accurate inference of the specifications of a lens using the specification prediction model 12b.

Also, with the eyeglass lens selection support system according to the present embodiment, the store terminal apparatus 3 acquires the measurement result of refractive error from the testing apparatus 4 capable of measuring the refractive error of user, and the server apparatus 1 acquires the measurement information of refractive error from the store terminal apparatus 3. The server apparatus 1 can thereby easily acquire measurement information of the refractive error of the user, and utilize the measurement information in inferring the specifications of a lens.

Also, with the eyeglass lens selection support system according to the present embodiment, the specification information that is output by the specification prediction model 12b includes information on the type of lens and the addition power of the eyeglass lens. The user is thereby able to find out specifications that are suitable for himself or herself regarding the type of lens and the addition power of the eyeglass lens, and is able to easily select an eyeglass lens.

Also, with the eyeglass lens selection support system according to the present embodiment, attribute information, use application information and measurement information of the user, prediction specification information predicted by the specification prediction model 12b, purchase specification information on the lens finally selected and purchased by the user, and tracking information relating to eyeglasses purchased by users is stored and accumulated in the user information DB 12c by the server apparatus 1, and processing for relearning the specification prediction model 12b is performed by creating training data on the basis of the stored information. It can thereby be expected that the eyeglass lens selection support system will update the specification prediction model 12b based on information accumulated by operation of the system, and enhance the accuracy of inference of an eyeglass lens suitable for the user.

Note that, in the present embodiment, the eyeglass lens selection support system is constituted to include a plurality of apparatuses such as the server apparatus 1, the store terminal apparatuses 3, the testing apparatuses 4, and tablet terminal apparatuses 5 and the like, but the present invention is not limited thereto. For example, a configuration may be adopted in which the processing that is performed by the server apparatus 1, the store terminal apparatus 3, the testing apparatus 4 and the tablet terminal apparatus 5 of the present embodiment is performed by a single apparatus. The apparatus configurations shown in the present embodiment and the sharing of processing load between the apparatuses can be changed as appropriate. Also, the configuration of the testing apparatus 4 that measures the refractive error shown in Fig. 9 is intended as an example, and the testing apparatus 4 is not limited thereto and may perform any type of measurement. Also, the screens shown in Figs. 11, 13 and 16 are intended as an example, and are not restricted thereto.

Also, in the present embodiment, a configuration was adopted in which processing for displaying the specification information display screen shown in Fig. 16 is performed by the store terminal apparatus 3, but is not limited thereto and the server apparatus 1 may perform processing for displaying the specification information display screen. That is, the server apparatus 1 may generate image data of the like for displaying the specification information display screen shown in Fig. 16 based on the specification information output by the specification prediction model 12b, and transmit to the generated data or the like to the store terminal apparatus 3, and the store terminal apparatus 3 that receives this data or the like may display the specification information display screen on the display unit 34 based on the received data.

The disclosed embodiments are considered in all respects to be illustrative and not restrictive. The scope of the invention is indicated by the claims rather than by the foregoing content, and all changes that come within the meaning and full range of equivalency of the claims are intended to be encompassed therein.

It is to be noted that, as used herein and in the appended claims, the singular forms "a", "an", and "the" include plural referents unless the context clearly dictates otherwise.

## Claims

**1.** A learning model (12b) generation method comprising:

acquiring training data in which attribute information of a user, measurement information related to eyes of the user and use application information of eyeglasses by the user are associated with specification information of an eyeglass lens; and
using the acquired training data to generate a learning model (12b) that outputs the specification information in a case where the attribute information, the measurement information and the use application information are input.

**2.** The learning model (12b) generation method according to claim 1,

wherein the attribute information includes an age of the user, and
the measurement information includes a measurement result of a refractive error of the eyes of the user.

**3.** The learning model (12b) generation method according to claim 1 or 2,
wherein the specification information includes a type of the eyeglass lens.

**4.** The learning model (12b) generation method according to any one of claims 1 to 3,
wherein the specification information includes an addition power of the eyeglass lens.

**5.** The learning model (12b) generation method according to any one of claims 1 to 4,

wherein training data in which the attribute information, the measurement information and the use application information of the user input to the generated learning model (12b) are associated with tracking information related to a lens selected by the user is acquired, and
the learning model (12b) is re-generated using the acquired training data.

**6.** A computer program (12a) that causes a computer (1) to execute processing comprising:

acquiring attribute information of a user, measurement information related to eyes of the user and use application information of eyeglasses by the user;
inputting the acquired attribute information, measurement information and use application information to a learning model (12b) that outputs specification information of an eyeglass lens in a case where the attribute information, the measurement information and the use application information are input; and
acquiring the specification information output by the learning model (12b).

**7.** The computer program (12a) according to claim 6,

wherein the attribute information includes an age of the user, and
the measurement information includes a measurement result of a refractive error of the eyes of the user.

**8.** The computer program (12a) according to claim 7,
wherein the measurement result is acquired from a refractive error measurement apparatus (4) that measures the refractive error of the eyes of the user.

**9.** The computer program (12a) according to any one of claims 6 to 8,
wherein the specification information includes a type of the eyeglass lens.

**10.** The computer program (12a) according to any one of claims 6 to 9,
wherein the specification information includes an addition power of the eyeglass lens.

**11.** The computer program (12a) according to any one of claims 6 to 10,
wherein the attribute information, the measurement information and the use application information input to the learning model '12b), the specification information output by the learning model (12b), and information related to a lens selected by the user are stored in a database in association with each other.

**12.** The computer program (12a) according to any one of claims 6 to 11,
wherein a screen presenting a specification of eyeglasses to the user based on the specification information acquired from the learning model (12b) is displayed.

13. The computer program (12a) according to claim 12, wherein an image schematically showing the type of the eyeglass lens and the addition power of the lens are presented on the screen in association with each other.

14. The computer program (12a) according to claim 12 or 13,

    wherein an acceptance/rejection selection relating to the specification of the eyeglass presented on the screen is received, and
    in a case where a selection rejecting the specification is received, a screen presenting another specification is displayed.

15. A computer program (32a) that causes a computer (3) to execute processing comprising:

    acquiring attribute information of a user, measurement information related to eyes of the user and use application information of eyeglasses by the user;
    acquiring, in a case where the acquired attribute information, measurement information and use application information are input to a learning model (12b) that outputs specification information of an eyeglass lens in a case where the attribute information, the measurement information and the use application information are input, the specification information output by the learning model (12b); and
    displaying a screen presenting a specification of eyeglasses to the user, based on the acquired specification information.

16. The computer program (32a) according to claim 15, wherein an image schematically showing the type of the eyeglass lens and the addition power of the lens are presented on the screen in association with each other.

17. The computer program (32a) according to claim 15 or 16,

    wherein an acceptance/rejection selection relating to the specification of the eyeglass presented on the screen is received, and
    in a case where a selection rejecting the specification is received, a screen presenting another specification is displayed.

18. An eyeglass lens selection support method comprising:

    acquiring attribute information of a user, measurement information related to eyes of the user and use application information of eyeglasses by the user;
    inputting the acquired attribute information, measurement information and use application information to a learning model (12b) that outputs specification information of an eyeglass lens in a case where the attribute information, the measurement information and the use application information are input; and
    acquiring the specification information output by the learning model (12b).

19. An eyeglass lens selection support system comprising:

    a storage unit (12) configured to store a learning model that outputs specification information of an eyeglass lens in a case where attribute information of a user, measurement information related to eyes of the user and use application information of eyeglasses by the user are input;
    a user information acquisition unit (11a) configured to acquire the attribute information, the measurement information and the use application information; and
    a specification information acquisition unit (11b) configured to input the attribute information, the measurement information and the use application information acquired by the user information acquisition unit (11a) to the learning model (12b), and acquire the specification information output by the learning model (12b).

# FIG. 1

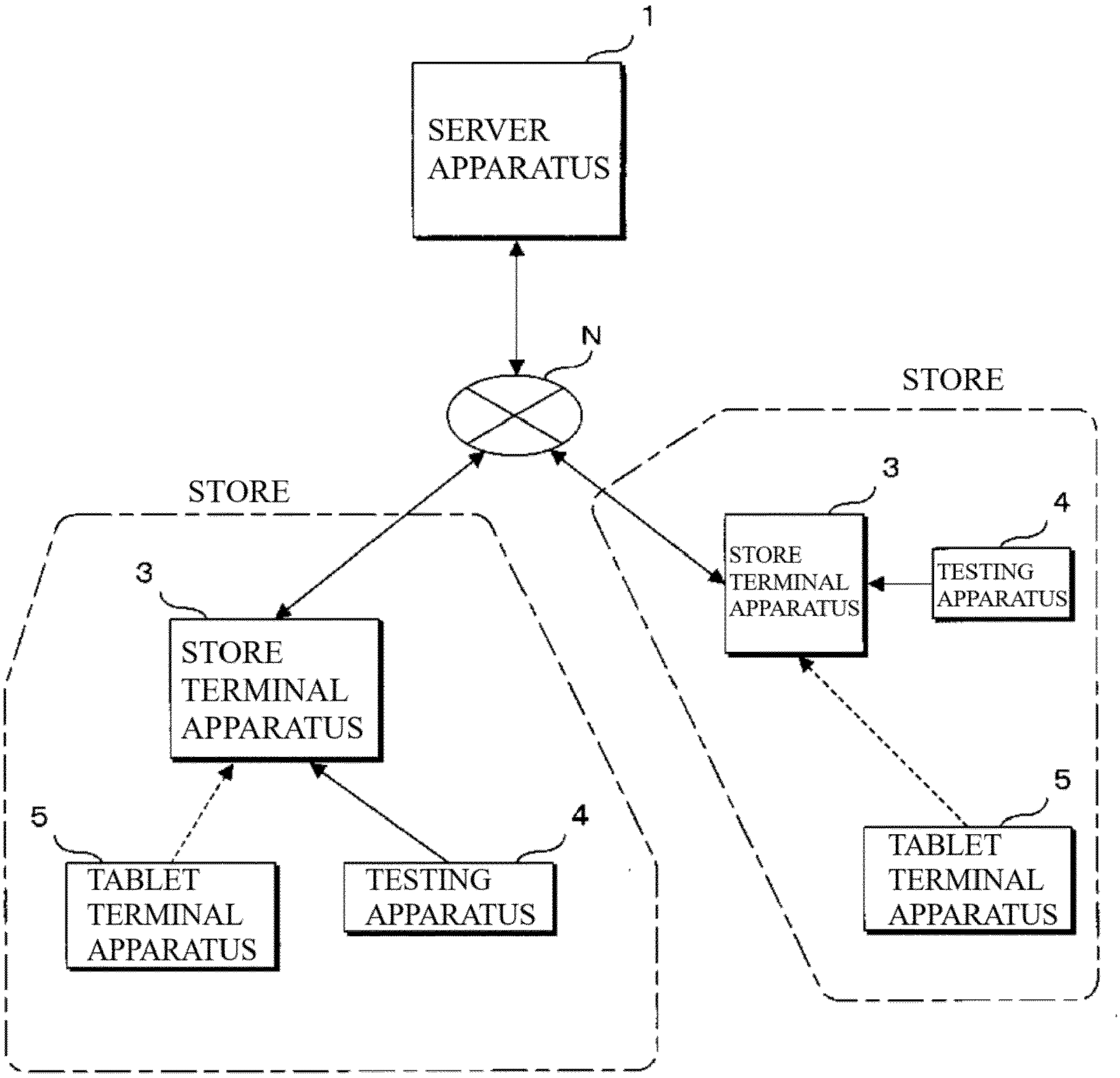
1
SERVER APPARATUS
N
STORE
STORE
3
STORE TERMINAL APPARATUS
4
TESTING APPARATUS
5
TABLET TERMINAL APPARATUS
3
STORE TERMINAL APPARATUS
4
TESTING APPARATUS
5
TABLET TERMINAL APPARATUS

FIG. 2

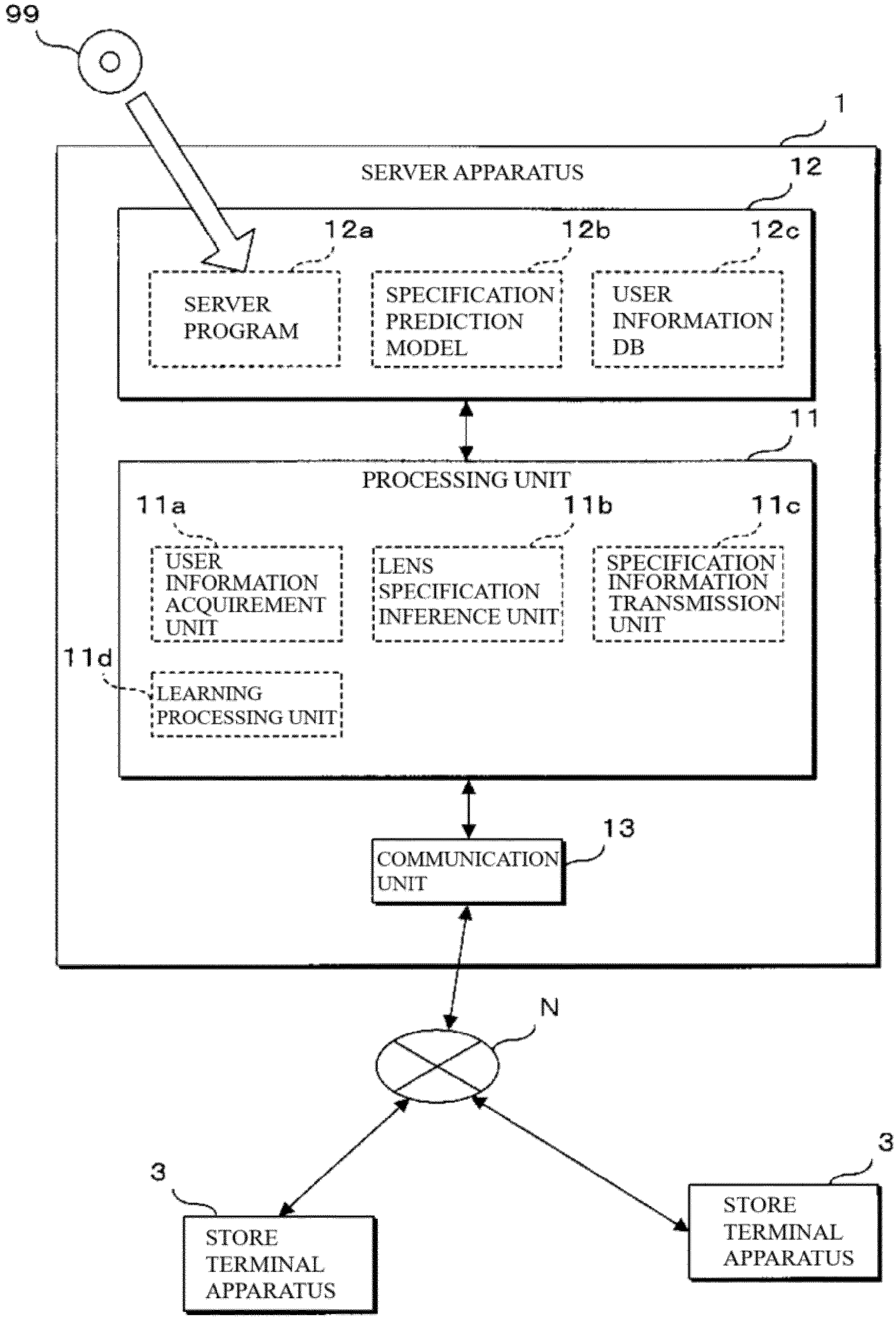
99
1
SERVER APPARATUS
12
12a
12b
12c
SERVER PROGRAM
SPECIFICATION PREDICTION MODEL
USER INFORMATION DB
11
PROCESSING UNIT
11a
11b
11c
USER INFORMATION ACQUIREMENT UNIT
LENS SPECIFICATION INFERENCE UNIT
SPECIFICATION INFORMATION TRANSMISSION UNIT
11d
LEARNING PROCESSING UNIT
13
COMMUNICATION UNIT
N
3
STORE TERMINAL APPARATUS
3
STORE TERMINAL APPARATUS

FIG. 3

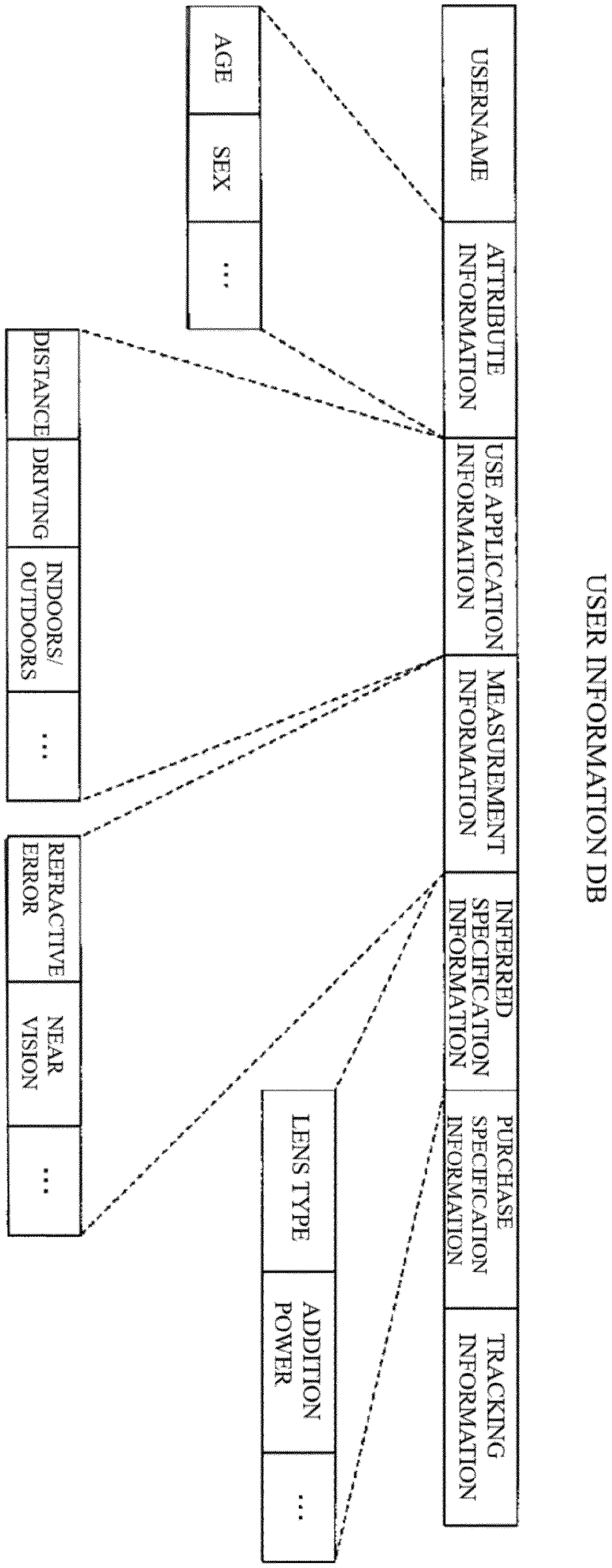
USER INFORMATION DB
USERNAME
ATTRIBUTE INFORMATION
USE APPLICATION INFORMATION
MEASUREMENT INFORMATION
INFERRED SPECIFICATION INFORMATION
PURCHASE SPECIFICATION INFORMATION
TRACKING INFORMATION
AGE
SEX
...
DISTANCE
DRIVING
INDOORS/ OUTDOORS
...
REFRACTIVE ERROR
NEAR VISION
...
LENS TYPE
ADDITION POWER
...

FIG. 4

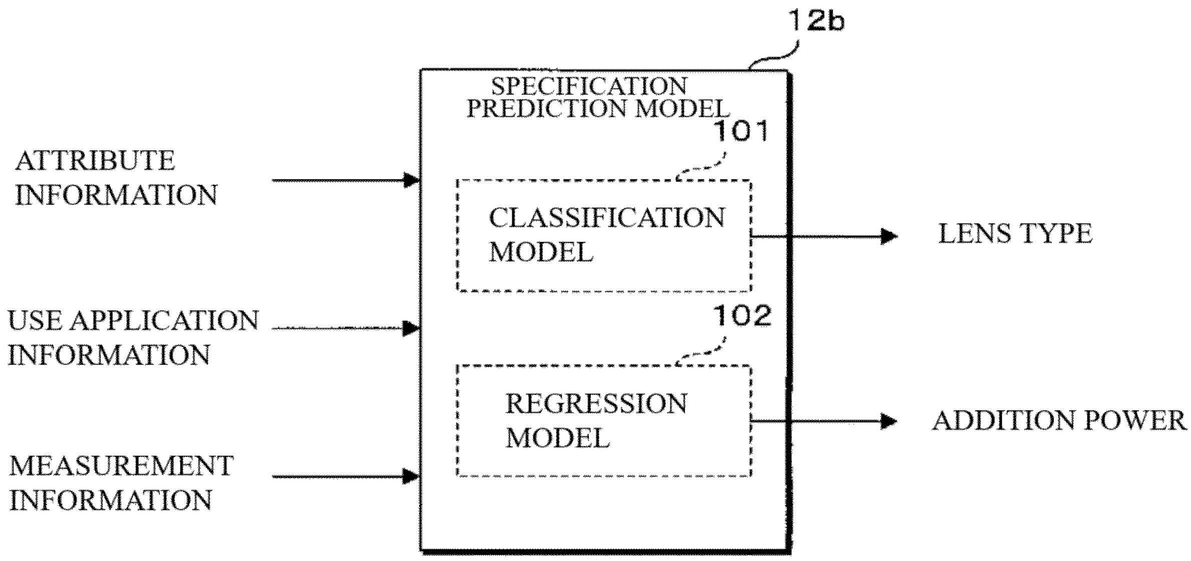
12b
SPECIFICATION
PREDICTION MODEL
101
ATTRIBUTE
INFORMATION
CLASSIFICATION
MODEL
LENS TYPE
USE APPLICATION
INFORMATION
102
REGRESSION
MODEL
ADDITION POWER
MEASUREMENT
INFORMATION

FIG. 5

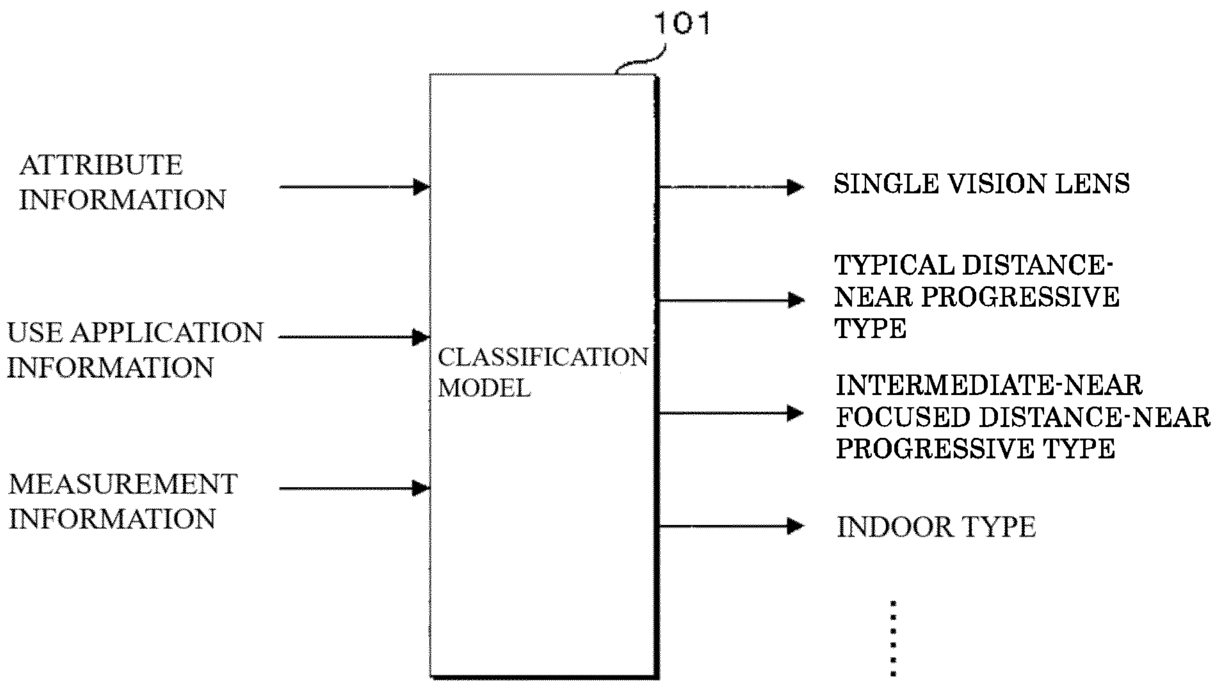
101
ATTRIBUTE
INFORMATION
USE APPLICATION
INFORMATION
MEASUREMENT
INFORMATION
CLASSIFICATION
MODEL
SINGLE VISION LENS
TYPICAL DISTANCE-
NEAR PROGRESSIVE
TYPE
INTERMEDIATE-NEAR
FOCUSED DISTANCE-NEAR
PROGRESSIVE TYPE
INDOOR TYPE

FIG. 6

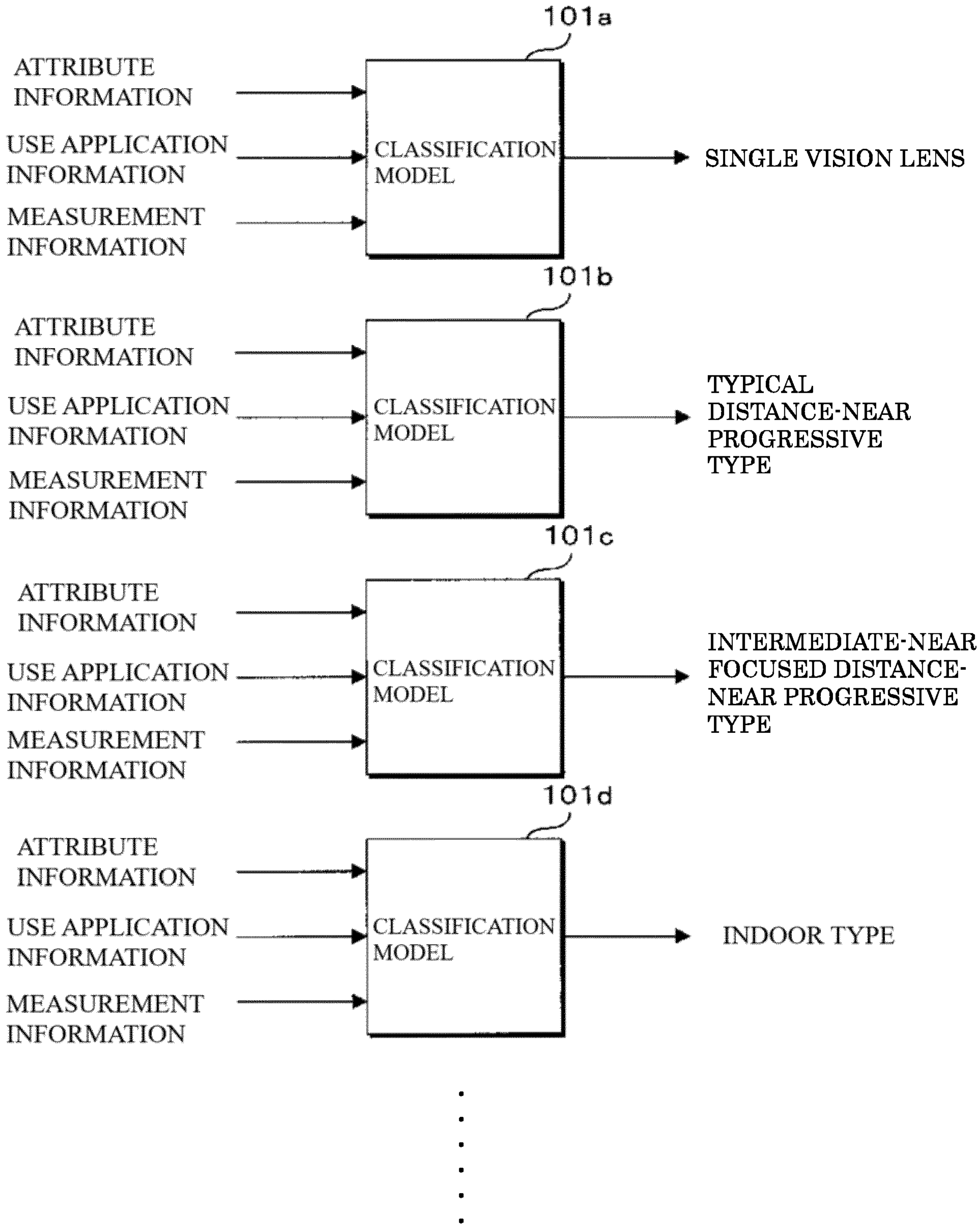
101a
ATTRIBUTE INFORMATION
USE APPLICATION INFORMATION
MEASUREMENT INFORMATION
CLASSIFICATION MODEL
SINGLE VISION LENS
101b
ATTRIBUTE INFORMATION
USE APPLICATION INFORMATION
MEASUREMENT INFORMATION
CLASSIFICATION MODEL
TYPICAL DISTANCE-NEAR PROGRESSIVE TYPE
101c
ATTRIBUTE INFORMATION
USE APPLICATION INFORMATION
MEASUREMENT INFORMATION
CLASSIFICATION MODEL
INTERMEDIATE-NEAR FOCUSED DISTANCE-NEAR PROGRESSIVE TYPE
101d
ATTRIBUTE INFORMATION
USE APPLICATION INFORMATION
MEASUREMENT INFORMATION
CLASSIFICATION MODEL
INDOOR TYPE

FIG. 7

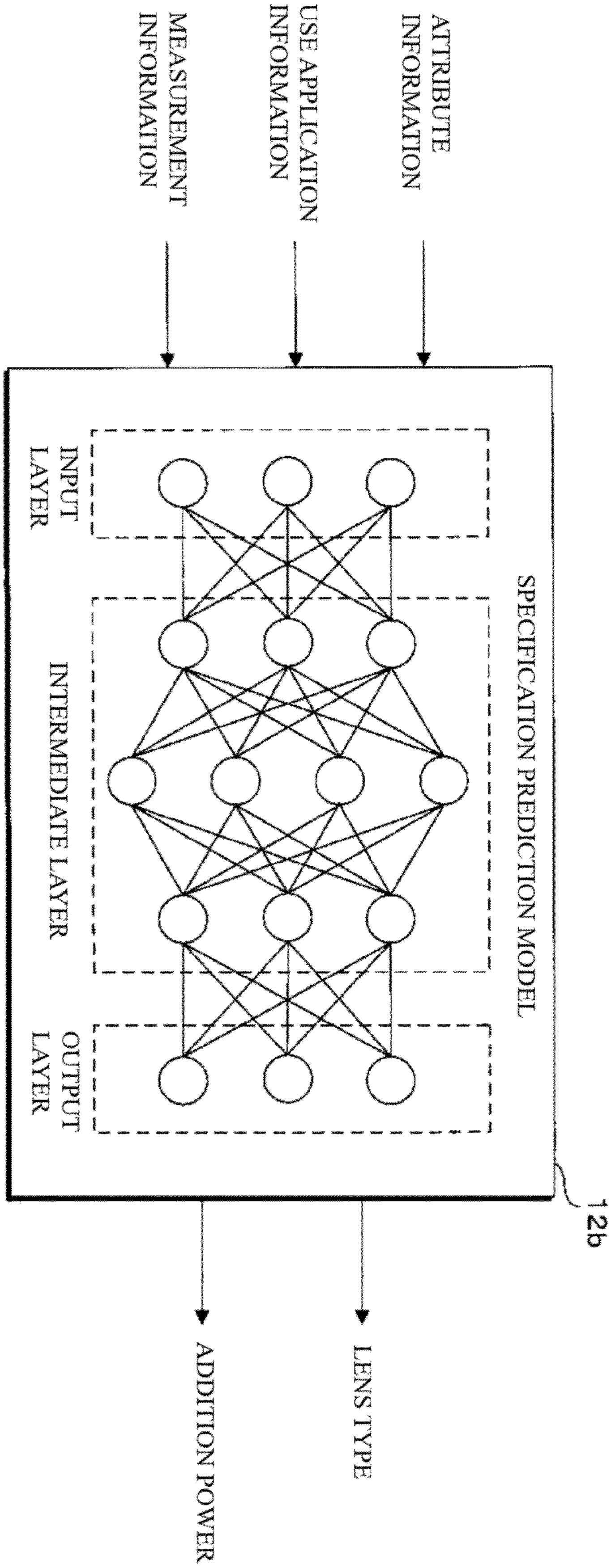
ATTRIBUTE INFORMATION
USE APPLICATION INFORMATION
MEASUREMENT INFORMATION
SPECIFICATION PREDICTION MODEL
INPUT LAYER
INTERMEDIATE LAYER
OUTPUT LAYER
12b
LENS TYPE
ADDITION POWER

# FIG. 8

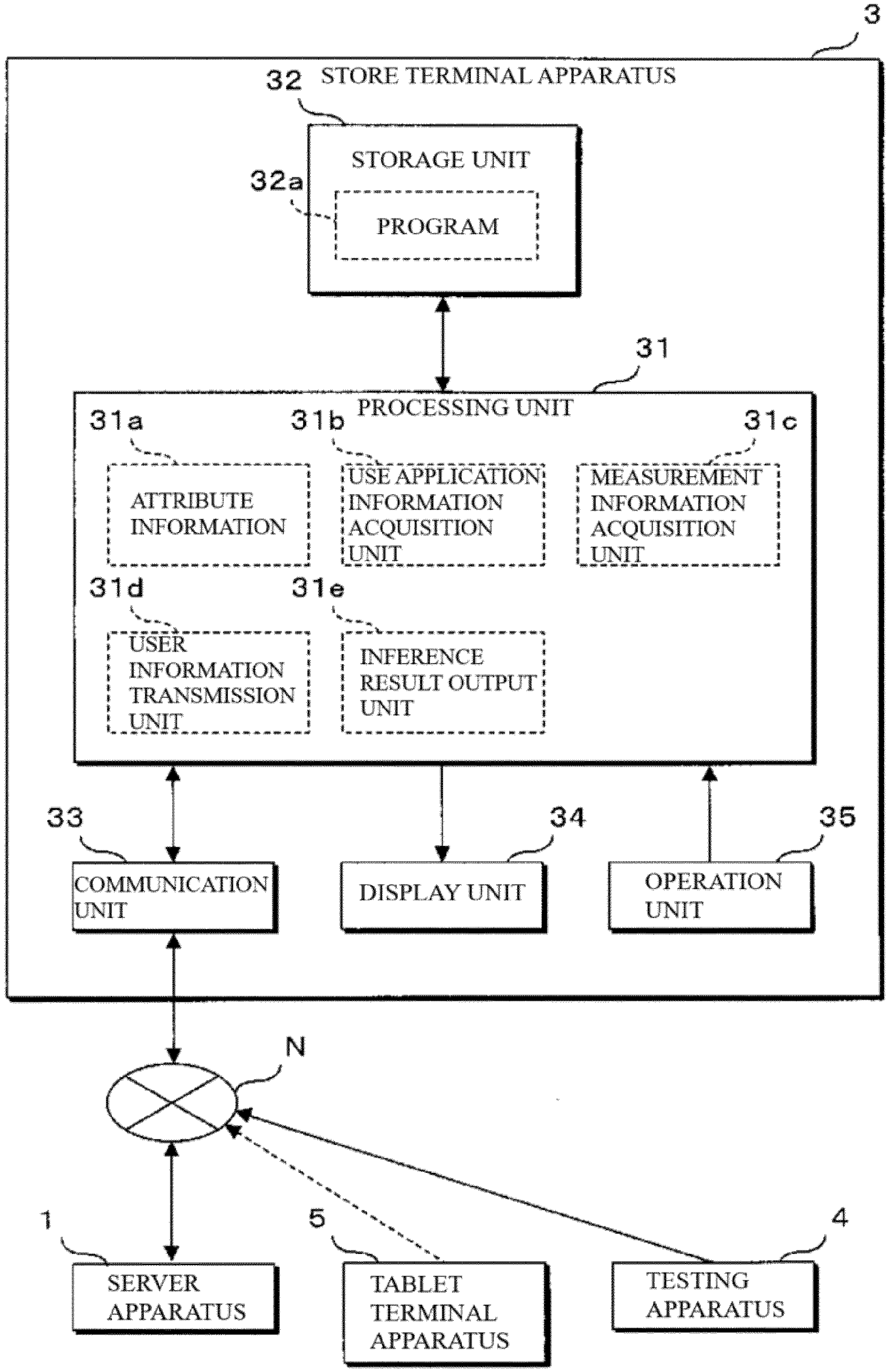
3
STORE TERMINAL APPARATUS
32
STORAGE UNIT
32a
PROGRAM
31
PROCESSING UNIT
31a
31b
31c
ATTRIBUTE INFORMATION
USE APPLICATION INFORMATION ACQUISITION UNIT
MEASUREMENT INFORMATION ACQUISITION UNIT
31d
31e
USER INFORMATION TRANSMISSION UNIT
INFERENCE RESULT OUTPUT UNIT
33
34
35
COMMUNICATION UNIT
DISPLAY UNIT
OPERATION UNIT
N
1
5
4
SERVER APPARATUS
TABLET TERMINAL APPARATUS
TESTING APPARATUS

FIG. 9

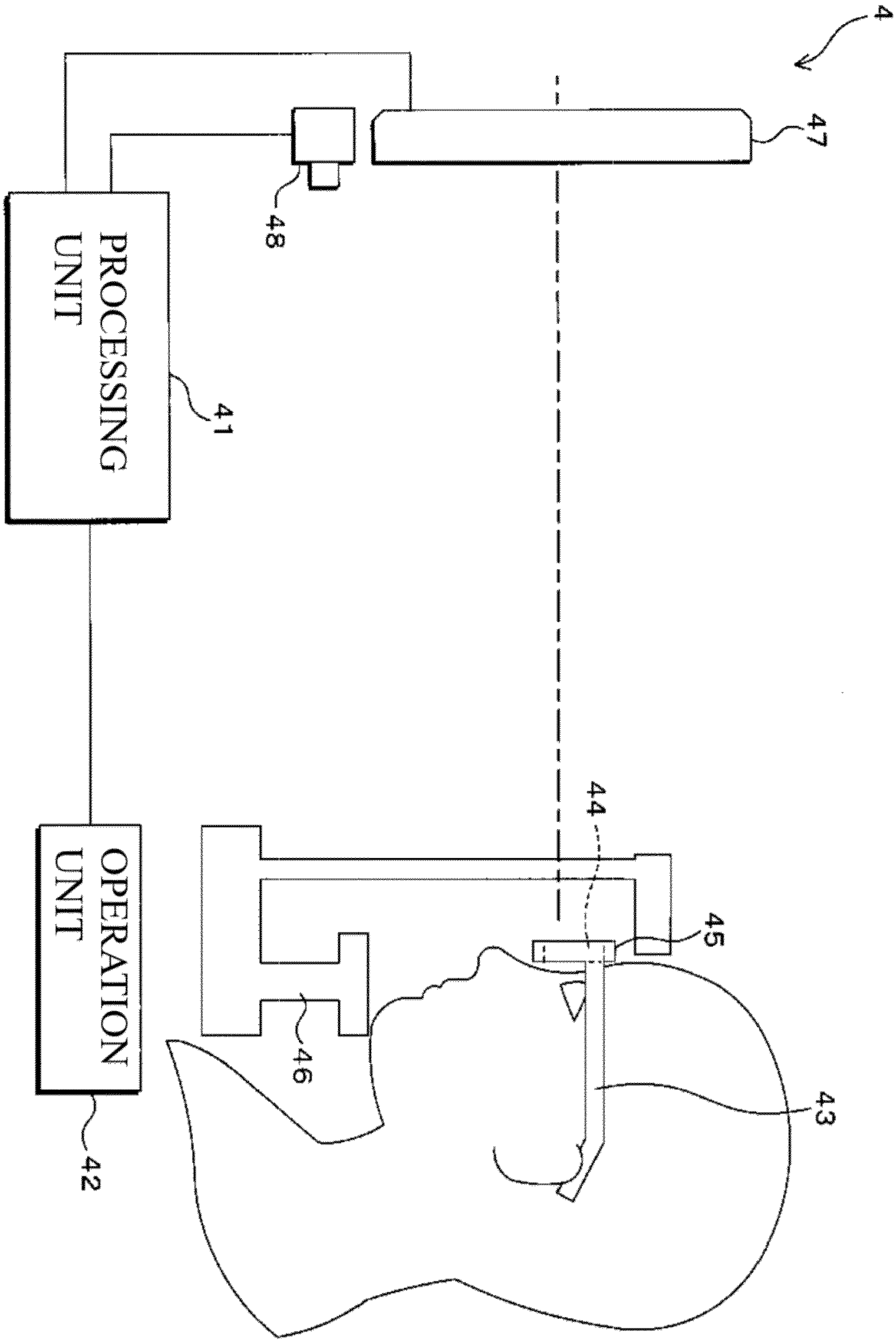

# FIG. 10

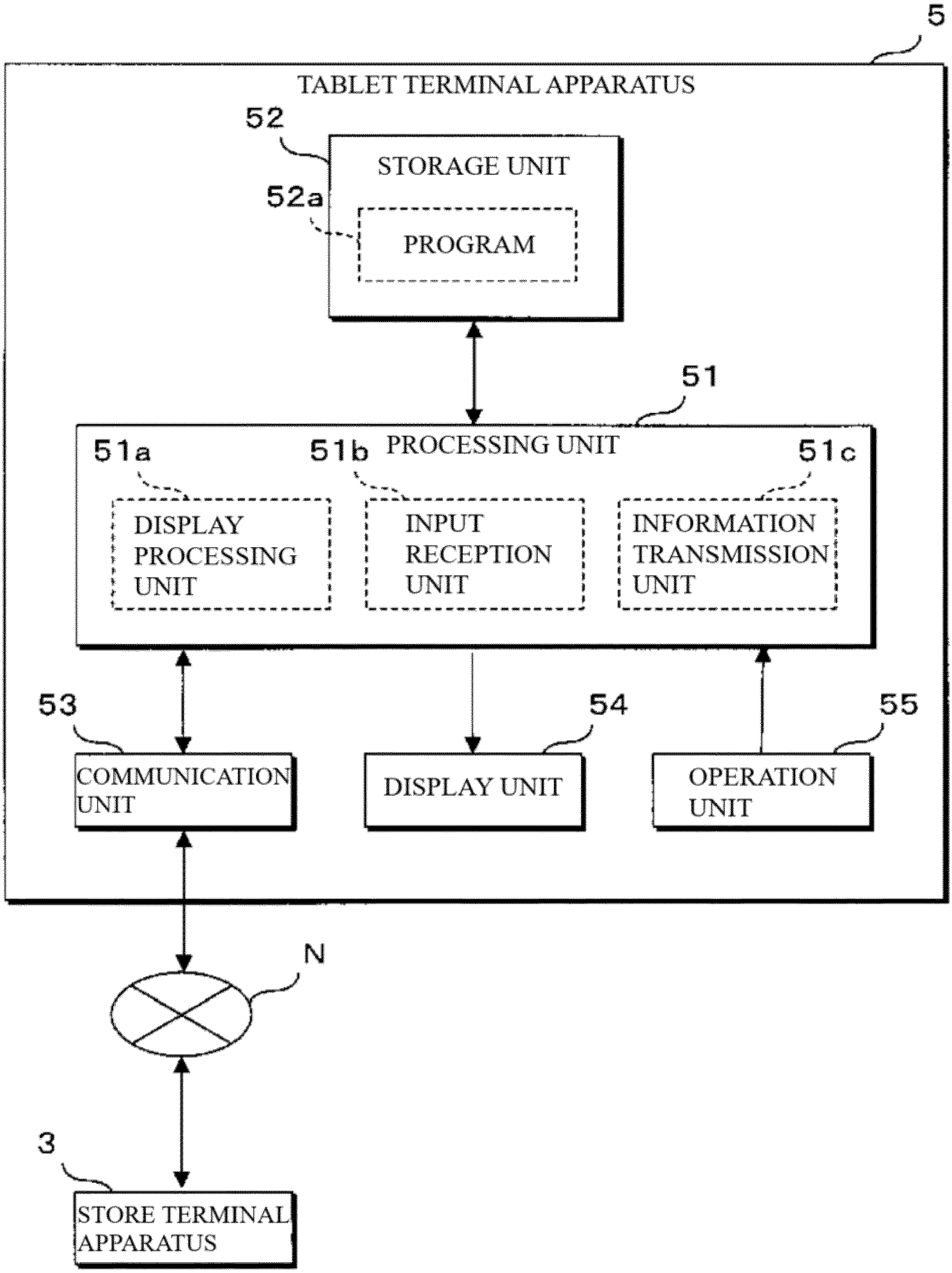
5
TABLET TERMINAL APPARATUS
52
STORAGE UNIT
52a
PROGRAM
51
PROCESSING UNIT
51a
51b
51c
DISPLAY PROCESSING UNIT
INPUT RECEPTION UNIT
INFORMATION TRANSMISSION UNIT
53
54
55
COMMUNICATION UNIT
DISPLAY UNIT
OPERATION UNIT
N
3
STORE TERMINAL APPARATUS

# FIG. 11

INPUT SCREEN FOR ATTRIBUTE INFORMATION AND USE APPLICATION INFORMATION

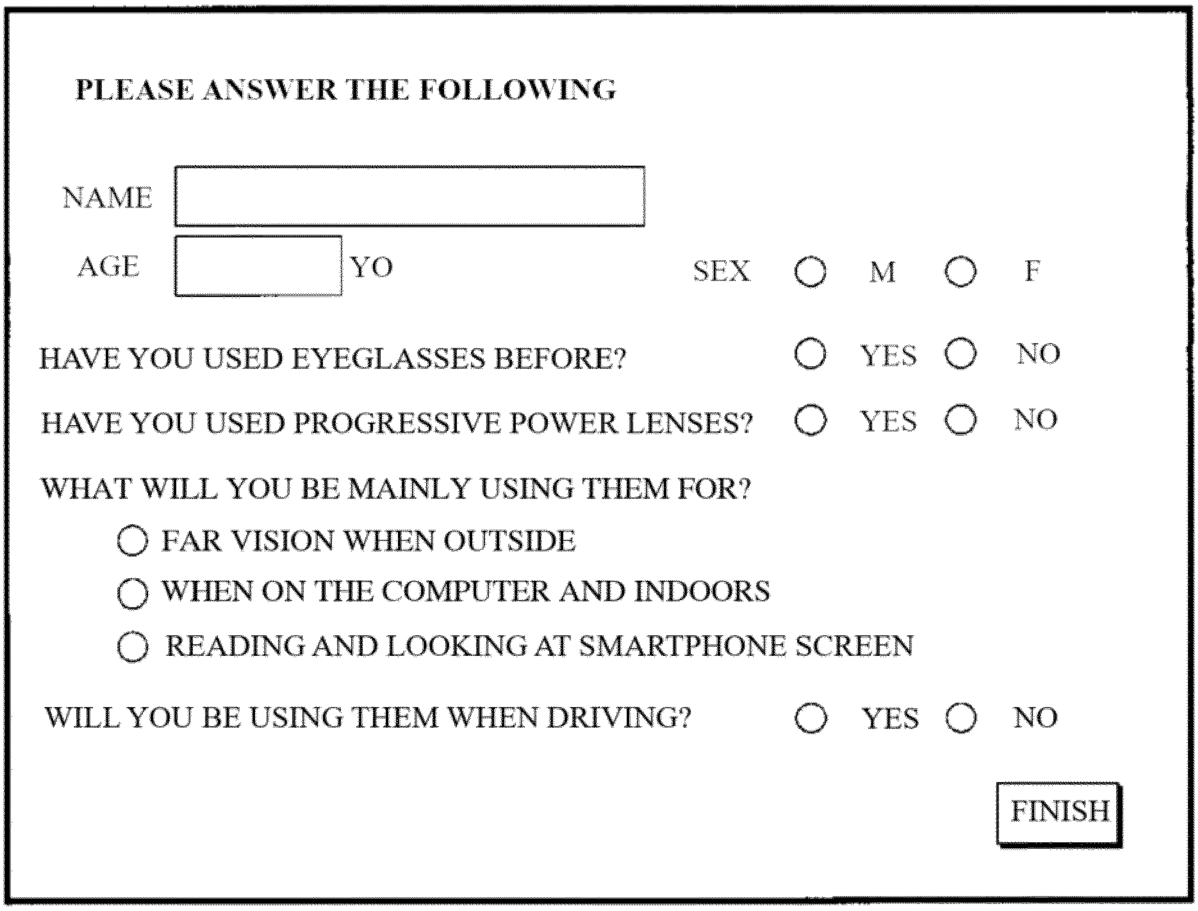

# FIG. 12

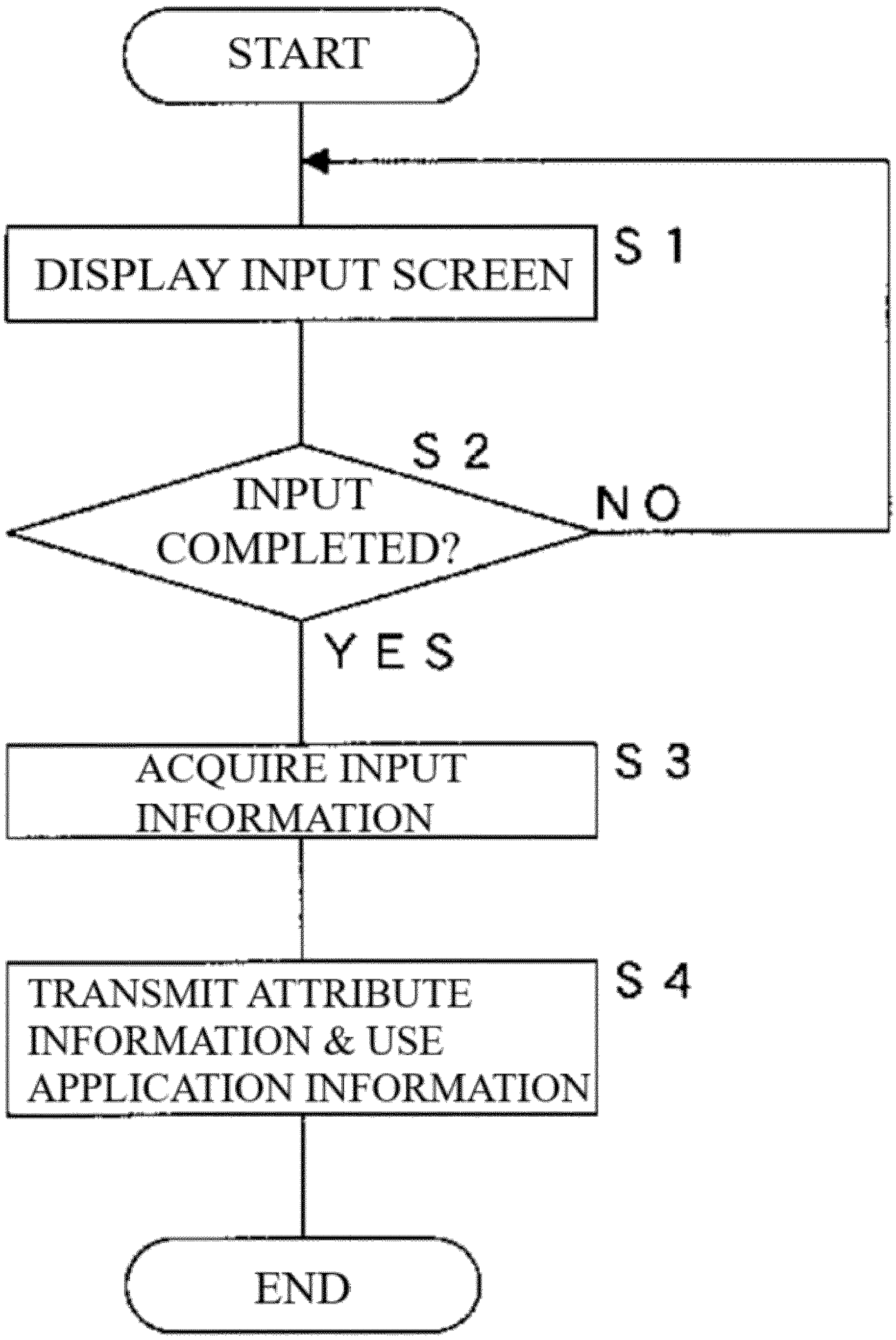
START
DISPLAY INPUT SCREEN
S 1
S 2
INPUT COMPLETED?
NO
YES
ACQUIRE INPUT INFORMATION
S 3
TRANSMIT ATTRIBUTE INFORMATION & USE APPLICATION INFORMATION
S 4
END

FIG. 13

MEASUREMENT INFORMATION DISPLAY SCREEN

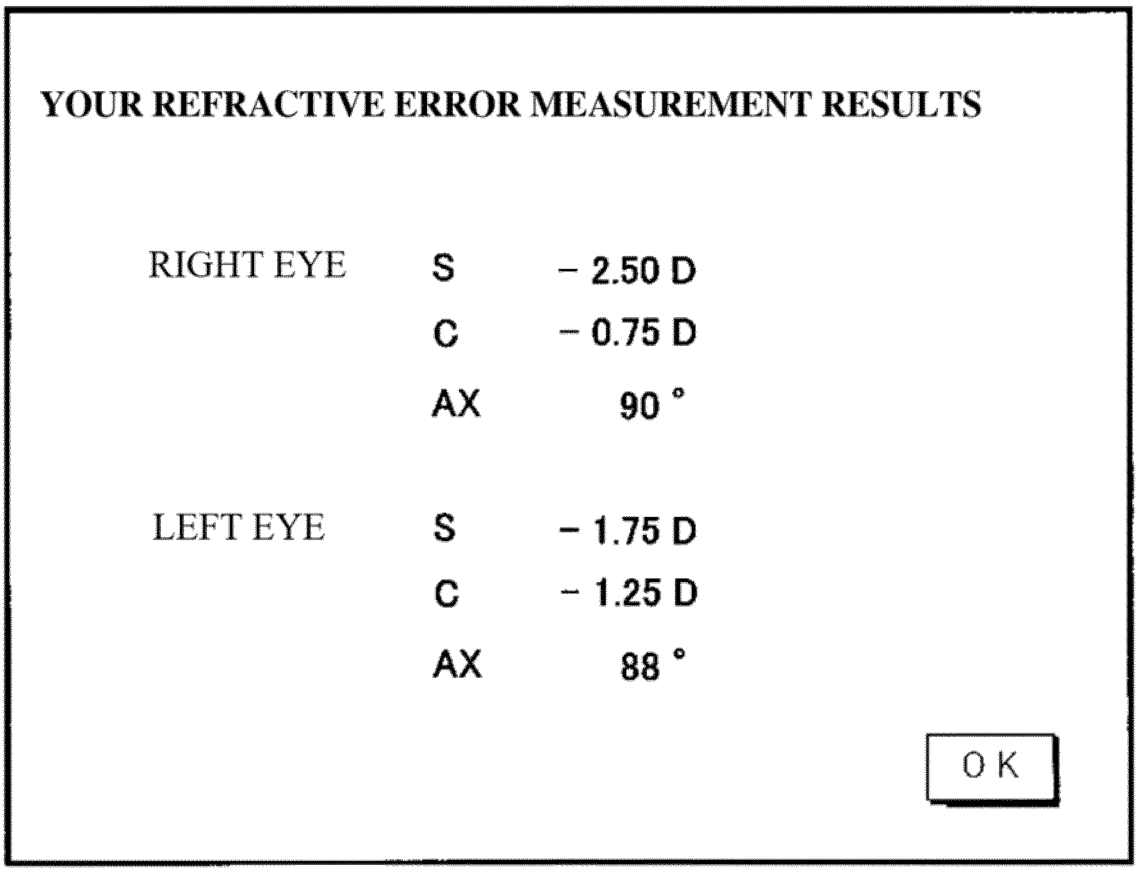

# FIG. 14

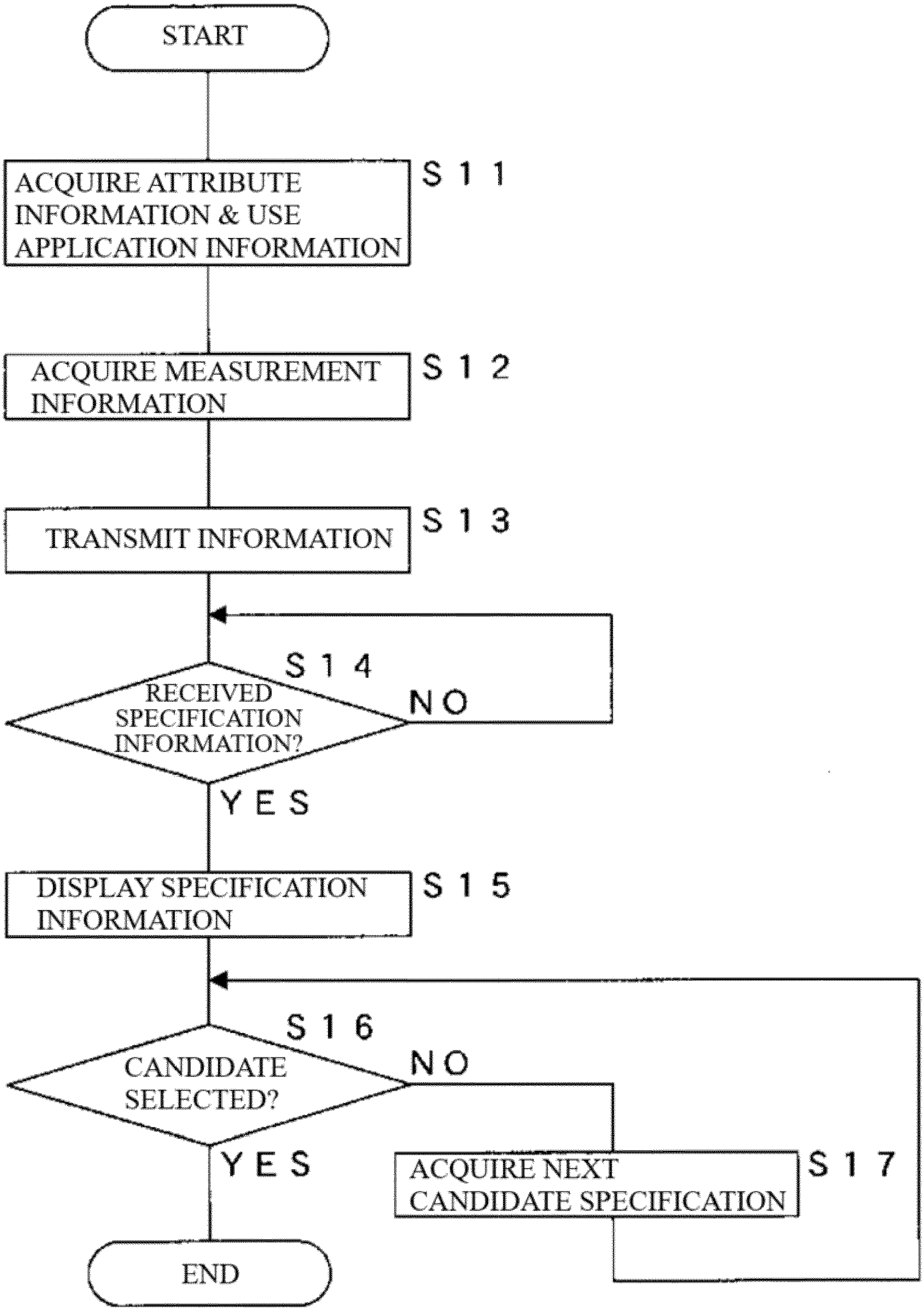
START
ACQUIRE ATTRIBUTE INFORMATION & USE APPLICATION INFORMATION
S11
ACQUIRE MEASUREMENT INFORMATION
S12
TRANSMIT INFORMATION
S13
S14
RECEIVED SPECIFICATION INFORMATION?
NO
YES
DISPLAY SPECIFICATION INFORMATION
S15
S16
CANDIDATE SELECTED?
NO
YES
ACQUIRE NEXT CANDIDATE SPECIFICATION
S17
END

# FIG. 15

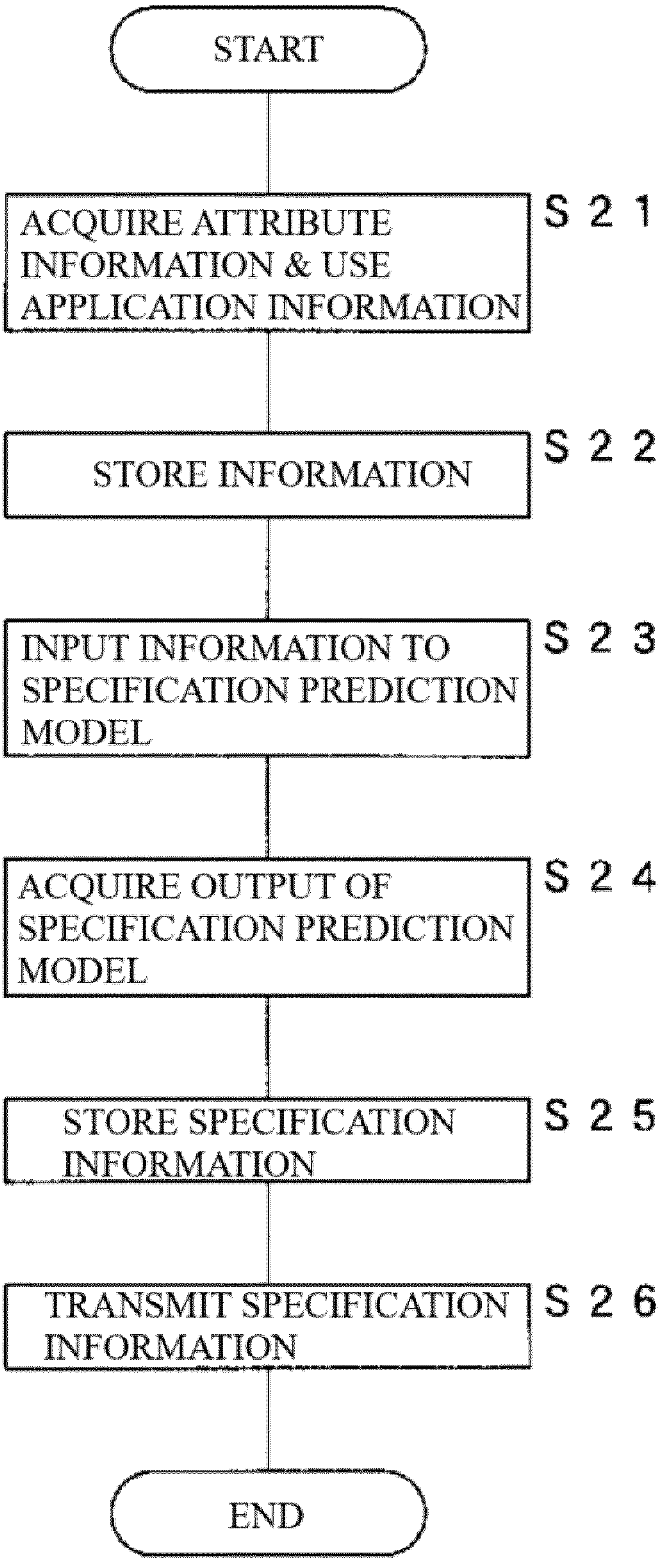
START
ACQUIRE ATTRIBUTE INFORMATION & USE APPLICATION INFORMATION
S21
STORE INFORMATION
S22
INPUT INFORMATION TO SPECIFICATION PREDICTION MODEL
S23
ACQUIRE OUTPUT OF SPECIFICATION PREDICTION MODEL
S24
STORE SPECIFICATION INFORMATION
S25
TRANSMIT SPECIFICATION INFORMATION
S26
END

# FIG. 16

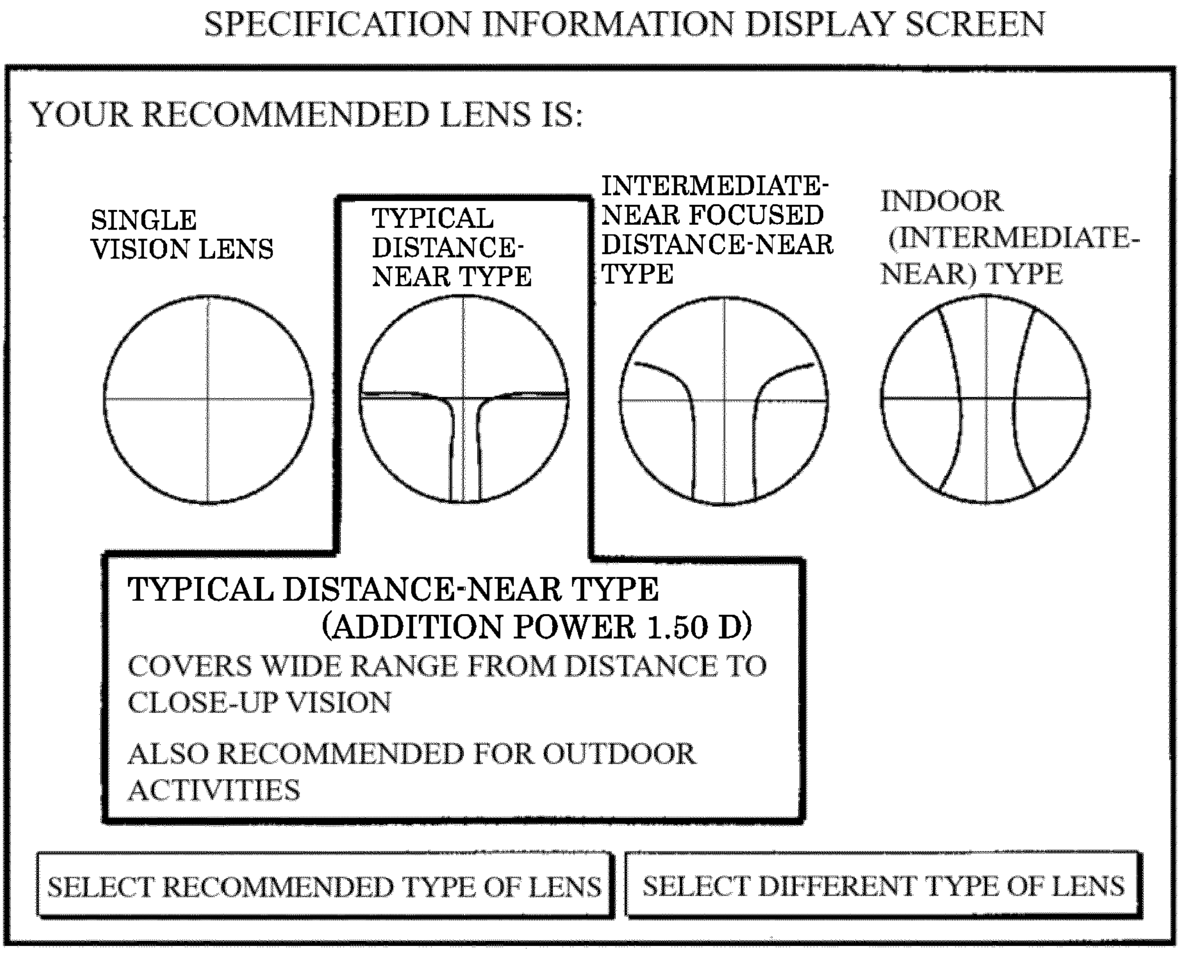
SPECIFICATION INFORMATION DISPLAY SCREEN
YOUR RECOMMENDED LENS IS:
SINGLE VISION LENS
TYPICAL DISTANCE-NEAR TYPE
INTERMEDIATE-NEAR FOCUSED DISTANCE-NEAR TYPE
INDOOR (INTERMEDIATE-NEAR) TYPE
TYPICAL DISTANCE-NEAR TYPE (ADDITION POWER 1.50 D)
COVERS WIDE RANGE FROM DISTANCE TO CLOSE-UP VISION
ALSO RECOMMENDED FOR OUTDOOR ACTIVITIES
SELECT RECOMMENDED TYPE OF LENS
SELECT DIFFERENT TYPE OF LENS

# FIG. 17

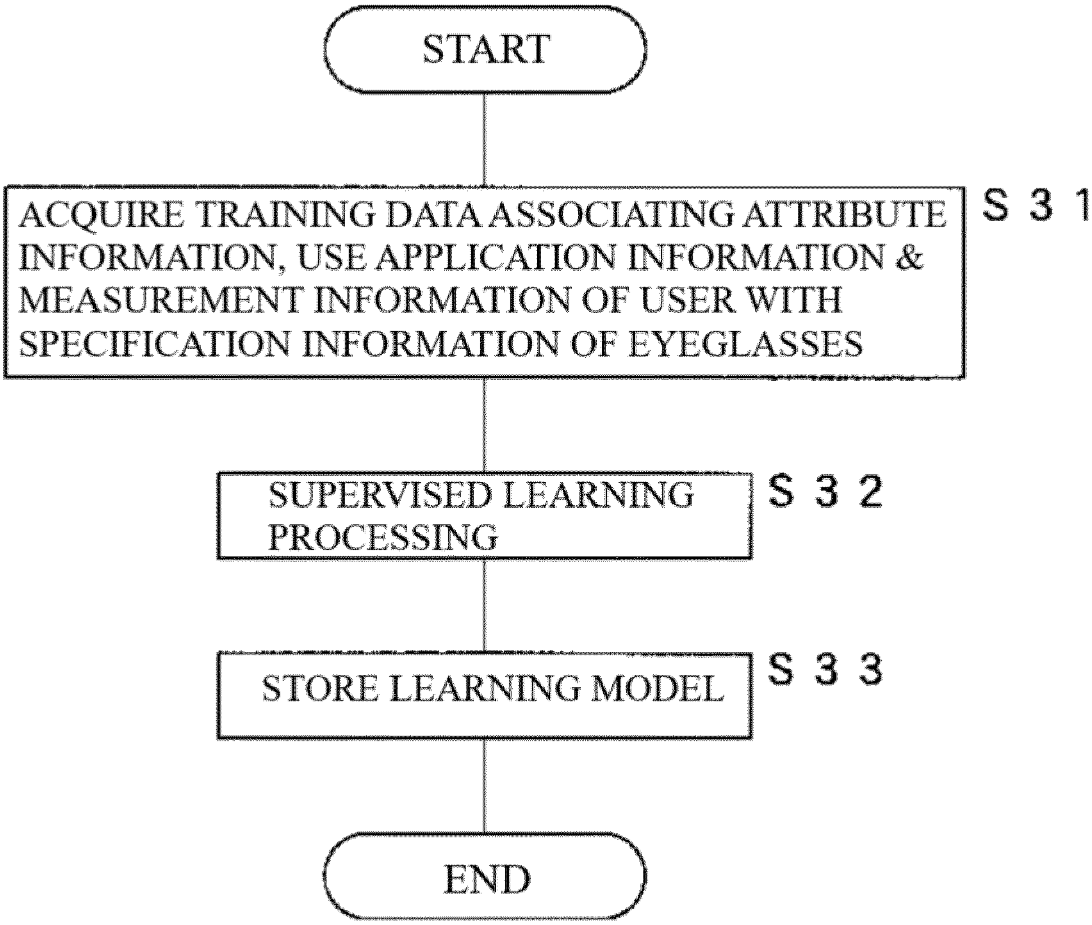
START
ACQUIRE TRAINING DATA ASSOCIATING ATTRIBUTE INFORMATION, USE APPLICATION INFORMATION & MEASUREMENT INFORMATION OF USER WITH SPECIFICATION INFORMATION OF EYEGLASSES
S 3 1
SUPERVISED LEARNING PROCESSING
S 3 2
STORE LEARNING MODEL
S 3 3
END

# FIG. 18

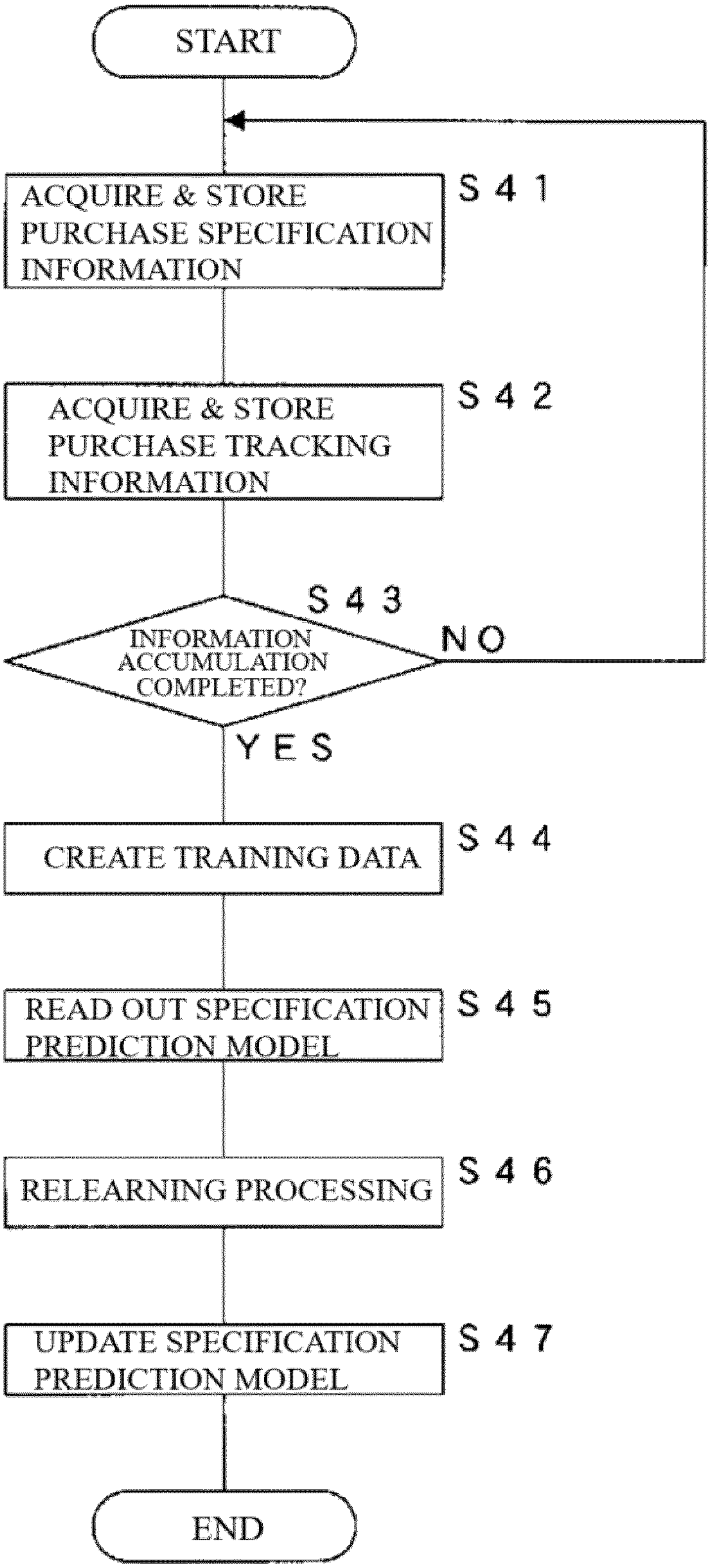
START
ACQUIRE & STORE PURCHASE SPECIFICATION INFORMATION
S41
ACQUIRE & STORE PURCHASE TRACKING INFORMATION
S42
S43
INFORMATION ACCUMULATION COMPLETED?
NO
YES
CREATE TRAINING DATA
S44
READ OUT SPECIFICATION PREDICTION MODEL
S45
RELEARNING PROCESSING
S46
UPDATE SPECIFICATION PREDICTION MODEL
S47
END

Europäisches Patentamt
European Patent Office
Office européen des brevets

# EUROPEAN SEARCH REPORT

Application Number
EP 20 19 7359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/057825 A1 (KATO KAZUTOSHI [JP]) 7 March 2013 (2013-03-07)<br>* paragraph [0003] - paragraph [0008] *<br>* paragraph [0038] - paragraph [0051] *<br>----- | 1-19 | INV.<br>G06Q10/04<br>G06Q50/22<br>G02C7/02 |
| X | JP 2019 058486 A (UNIV TSUKUBA; TOPCON CORP) 18 April 2019 (2019-04-18)<br>* paragraph [0016] - paragraph [0019] *<br>* paragraph [0025] - paragraph [0026] *<br>----- | 1-19 | |
| X,D | JP H03 206417 A (HOYA CORP)<br>9 September 1991 (1991-09-09)<br>* the whole document *<br>----- | 1-19 | |

TECHNICAL FIELDS SEARCHED (IPC)

G06Q
G02C

The present search report has been drawn up for all claims

1

| Place of search | Date of completion of the search | Examiner |
|---|---|---|
| Munich | 22 January 2021 | Frank, Korbinian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 19 7359

This annex lists the patent family members relating to the patent documents cited in the above-mentioned European search report. The members are as contained in the European Patent Office EDP file on
The European Patent Office is in no way liable for these particulars which are merely given for the purpose of information.

22-01-2021

| Patent document cited in search report | Publication date | Patent family member(s) | Publication date |
|---|---|---|---|
| US 2013057825 A1 | 07-03-2013 | JP 5897285 B2 | 30-03-2016 |
| | | JP 2013052095 A | 21-03-2013 |
| | | US 2013057825 A1 | 07-03-2013 |
| JP 2019058486 A | 18-04-2019 | NONE | |
| JP H03206417 A | 09-09-1991 | JP 2894500 B2 | 24-05-1999 |
| | | JP H03206417 A | 09-09-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3206417 A
- JP 2013052095 A